# EUROPEAN PATENT SPECIFICATION

(11) **EP 4 150 520 B1**
(45) Date of publication and mention of the grant of the patent: **23.09.2026**
(21) Application number: 21804664.7
(22) Date of filing: 14.05.2021
(51) Int. Cl.: G06V 10/80, G06V 40/16, G06V 10/75, G06V 10/764, G06V 10/774

(54) **WEARABLE DEVICES FOR FACIAL EXPRESSION RECOGNITION**
TRAGBARE VORRICHTUNGEN ZUR GESICHTSAUSDRUCKSERKENNUNG
DISPOSITIFS PORTABLES POUR LA RECONNAISSANCE D'EXPRESSION FACIALE

(30) Priority: 15.05.2020 US 202063025979 P
(43) Date of publication of application: 22.03.2023
(73) Proprietor: Cornell University, Ithaca, NY 14850 (US)
(72) Inventor: ZHANG, Cheng, Ithaca, New York 14850 (US); CHEN, Tuochao, Ithaca, New York 14853 (US); STEEPER, Benjamin, Ithaca, New York 14853 (US); GUIMBRETIERE, Francois, Ithaca, New York 14850 (US); LI, Ke, Suzhou, Jiangsu 215011 (CN); ZHANG, Ruidong, Lianyungang, Jiangsu 222100 (CN); LIM, Hyunchul, Ithaca, New York 14850 (US)
(74) Representative: Mathys & Squire
(86) International application number: PCT/US2021/032511
(87) International publication number: WO 2021/231900

(56) References cited:
- US-A1- 2015 310 263
- US-A1- 2018 027 307
- US-A1- 2018 027 307
- US-A1- 2018 092 549
- US-A1- 2018 365 484
- US-A1- 2018 365 484
- US-A1- 2019 012 528
- US-A1- 2019 285 881
- "EarBuddy: Enabling On-Face Interaction via Wireless Earbuds", PROCEEDINGS OF THE 2020 CHI CONFERENCE ON HUMAN FACTORS IN COMPUTING SYSTEMS ACMPUB27, NEW YORK, NY, USA, 21 April 2020 (2020-04-21), pages 1 - 14, XP058545648, ISBN: 9781450367080, DOI: 10.1145/3313831.3376836

## Description

### CROSS-REFERENCE TO RELATED APPLICATIONS

This application claims the benefit of U.S. Provisional Patent Application No. 63/025,979, filed May 15, 2020 and entitled "C-Face: Continuously Reconstructing Facial Expressions By Deep Learning Contours Of The Face With Ear-Mounted Miniature Cameras."

### TECHNICAL FIELD

This disclosure relates to systems and methods to reconstruct facial expressions from head or neck-mounted wearable devices.

### BACKGROUND

Humans use facial expressions as a natural mode of communication. The ability to continuously record and understand facial movements can improve interactions between humans and computers in a variety of applications. Documents US 2019/285881 A1, US 2018/365484 A1, US 2018/092549 A1, US 2015/310263 A1 and US 2018/027307 A1 teach wearable systems designed to track, identify, and reconstruct a user's facial expressions via predictive or trained algorithms using as input single or multiple optical/ thermal/ depth cameras. "EarBuddy: Enabling On-Face Interaction via Wireless Earbuds", 2020 teaches the use of wearable acoustic sensors for the classification of manual gestures on a user's face.

Conventional facial reconstruction methods require a camera to be positioned in front of a user's face with a specified position and angle relative to the user's face. To achieve reliable facial reconstruction, the camera needs an entire view of the face without occlusions. Conventional facial reconstruction methods do not perform well if the user is in motion, the camera is not appropriately set up, the camera is not in front of the user, or the user's face is partially occluded or not fully visible to the camera due to the camera's position or angle relative to the user's face.

As an alternative to frontal camera systems, wearable devices for facial expression reconstruction have been developed using sensing techniques, such as acoustic interference, pressure sensors, electrical impedance tomography, and electromyography. These wearable devices use instrumentation that is mounted directly on a user's face. These conventional devices often cover the user's face and only recognize discrete facial expressions. Examples of these conventional wearable devices include face masks with built-in ultrasonic transducers or electrodes secured to a human face with electromyography or capacitive sensing abilities. These wearable devices are attached directly to the user's face or body and may block the field of vision and interfere with normal daily activities, such as eating or socializing.

### BRIEF DESCRIPTION OF THE DRAWINGS

Figure 1 is a block diagram depicting a facial expression reconstruction system.
Figure 2, comprising Figures 2A and 2B, is a perspective view of head-mounted wearable devices for facial expression reconstruction.
Figure 3, comprising Figures 3A, 3B, and 3C, is an illustration depicting examples of head-mounted wearable devices on a user.
Figure 4 is a block diagram depicting a deep-learning model process.
Figure 5 is a block diagram depicting a classifier process.
Figure 6 is a diagram depicting the correlation between frontal view camera images, landmark training data, predicted facial expression landmarks, and right and left facial contour images.
Figure 7 is a diagram depicting the correlation between frontal view camera images, two-dimensional training data, predicted two-dimensional facial expressions, and right and left facial contour images.
Figure 8 is a block flow diagram depicting a method to reconstruct facial expressions.
Figure 9 is a block flow diagram depicting a method to create a data training set using frontal view digital images.
Figure 10 is a block flow diagram depicting a method to reconstruct facial expressions using one or more facial digital images.
Figure 11 is a block flow diagram depicting a method to pre-process each pair of synchronized facial digital images.
Figure 12, comprising Figures 12A, 12B, and 12C, is a perspective view of neck-mounted wearable devices for facial expression reconstruction.
Figure 13, comprising Figures 13A and 13B, is an illustration depicting examples of neck-mounted wearable devices on a user.
Figure 14 is a block diagram depicting an alternate embodiment of a deep-learning model process.
Figure 15A is a diagram depicting the correlation between frontal view camera images, three-dimensional training data, predicted three-dimensional face expressions, and infrared facial images.
Figure 15B is a diagram depicting the correlation between frontal view camera images, three-dimensional training data, predicted three-dimensional face expressions, and infrared facial images.
Figure 16 is a block flow diagram depicting an alternative method to create a data training set using frontal view images.
Figure 17 is a block flow diagram depicting an alternative method to reconstruct facial expressions using one or more facial digital images.
Figure 18 is a block flow diagram depicting an alternative method to pre-process the one or more digital facial images.
Figure 19 is a block diagram depicting a computing machine and a module.

### DETAILED DESCRIPTION

### Overview

The present technology allows reconstruction of facial expressions using non-obtrusive, wearable devices that capture images of facial contours or chin profiles of a user's face. The wearable devices include head-mounted technology that continuously reconstructs full facial expressions by capturing the positions and shapes of the mouth, eyes, and eyebrows. Miniature cameras capture contours of the sides of the face, which are used to train a deep-learning model to predict facial expressions. An alternate embodiment of this technology includes a neck-mounted technology to continuously reconstruct facial expressions. Infrared cameras capture chin and face shapes underneath the neck, which are used to train a deep-learning model to predict facial expressions. Additional embodiments include various camera types or acoustic imaging devices for the wearable devices.

The systems of this technology include wearable devices configured with miniature cameras in communication with computing devices to transmit images from the cameras to a remote server or data acquisition system for facial expression reconstruction. The wearable devices include headphone, earbud, necklace, neckband, and other form factors. Each of the form factors include miniature cameras and micro computing devices, such as Raspberry Pi^{™}.

The exemplary headphone device includes two cameras and may include functionality with Bluetooth or Wi-Fi connectivity and speakers embedded within the earpieces of the headphone. The cameras are attached to the earpieces of the headphone device and are connected to a computing device to transmit acquired images to a remote server. The headphone device is configured to acquire images of the contours of a user's face by directing the cameras at adjustable angles and positions.

The exemplary earbud devices are constructed for wear as a left-side earbud and a right-side earbud. Both the left and right earbud devices include a camera to acquire images of the contours of a user's face. Each camera is connected to a computing device to transmit acquired images to a remote server.

The exemplary necklace device includes an infrared ("IR") camera with an IR LED and an IR bandpass filter. The necklace device is configured to acquire images of a user's chin profile by directing the camera at the profile of a user's chin. The IR LED projects IR light onto a user's chin to enhance the quality of the image captured by the camera. The IR bandpass filter filters visible light such that the camera captures infrared light reflected by a user's skin. The camera is connected a computing device to transmit acquired images to a remote server.

The exemplary neckband device includes two cameras fashioned to be positioned on the left and right sides of a user's neck. The neckband device includes IR LEDs and IR bandpass filters configured in proximity to each camera, similar to the necklace device. Each camera is connected a computing device to transmit acquired images to a remote server.

Using one of the wearable devices, facial expressions can be reconstructed from images acquired from the cameras within the devices. A data training set is created using frontal view images of a user in a machine learning algorithm. Multiple frontal view images of a user are acquired with a variety of facial expressions. The frontal view images are transmitted to a data processing system to create the data training set.

The wearable device captures one or more facial digital images and transmits the digital images to data acquisition computing devices connected to each of the cameras of the wearable device. The data acquisition computing devices subsequently transmit the images to a remote server or data processing system. The data processing system reconstructs facial expressions using the images. The data processing system pre-processes the images by reducing the image size, removing noise from the image, extracting skin color from the background of the image, and binarizing each the image. In some embodiments, a wearable imaging system comprises one or more imaging sensors, wherein the one or more imaging sensors are positioned to capture one or more images with incomplete side contours of a face (for example, from ear(s) and/or from neck), a processor, and a non-transitory machine-readable storage medium comprising machine-readable instructions executed by the processor to extract a plurality of features (for example, landmarks or parameters) from the one or more images, compare the extracted features and/or changes of the extracted features with features from a ground truth, and output one or more recognition or prediction results, wherein the results comprise a word or a phrase spoken by a user, an emoji of a facial expression of a user, and/or a real-time avatar of a facial expression of a user.

The data processing system applies a deep-learning model to the pre-processed images for facial expression reconstruction. The reconstructed facial expressions may be used in applications such as silent speech and emoji recognition.

These and other aspects, objects, features, and advantages of the disclosed technology will become apparent to those having ordinary skill in the art upon consideration of the following detailed description of illustrated examples.

### Example System Architecture

Turning now to the drawings, in which like numerals indicate like (but not necessarily identical) elements throughout the figures, examples of the technology are described in detail.

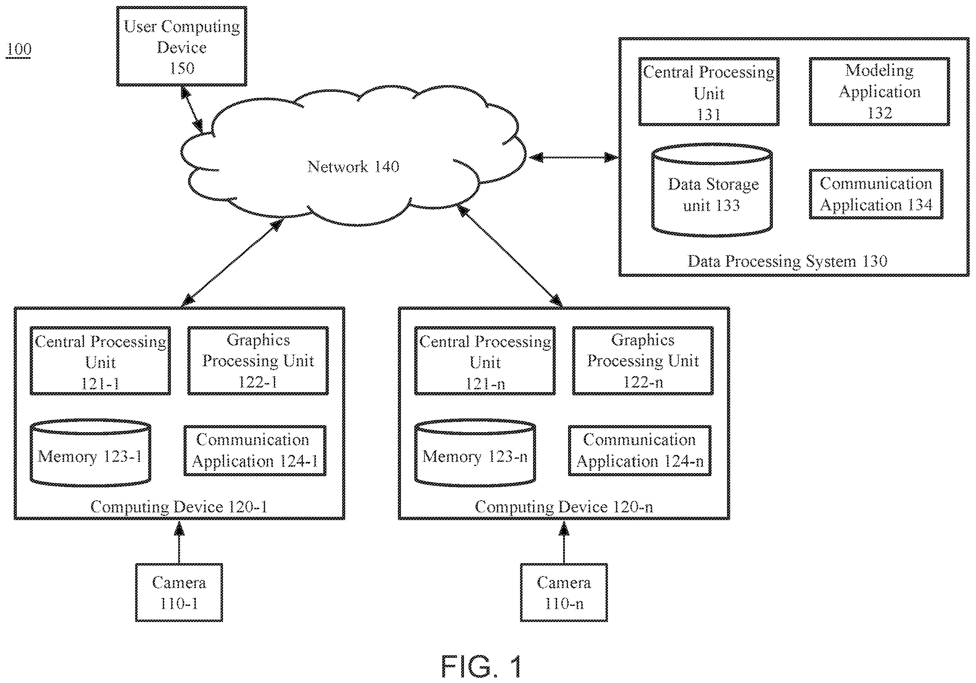

Figure 1 is a block diagram depicting a facial expression reconstruction system 100, in accordance with certain examples. As depicted in Figure 1, the facial expression reconstruction system 100 comprises cameras 110-1 through 110-n, computing devices 120-1 through 120-n, data processing system 130, and user computing device 150. Computing devices 120, data processing system 130, and user computing device 150 are configured to communicate via a network 140.

In example embodiments, network 140 includes one or more wired or wireless telecommunications systems by which network devices may exchange data. For example, the network 140 may include one or more of a local area network (LAN), a wide area network (WAN), an intranet, an Internet, a storage area network (SAN), a personal area network (PAN), a metropolitan area network (MAN), a wireless local area network (WLAN), a virtual private network (VPN), a cellular or other mobile communication network, a BLUETOOTH^{®} wireless technology connection, a near field communication (NFC) connection, any combination thereof, and any other appropriate architecture or system that facilitates the communication of signals, data, and/or messages.

Facial expression reconstruction system 100 comprises cameras 110 that may be any suitable sensors for capturing images. For example, cameras 110 may include depth cameras, red-green-blue ("RGB") cameras, infrared ("IR") sensors, acoustic cameras or sensors, speakers, microphones, thermal imaging sensors, charge-coupled devices ("CCDs"), complementary metal oxide semiconductor ("CMOS") devices, active-pixel sensors, radar imaging sensors, fiber optics, and any other suitable image device technology.

The image frame resolution of the camera 110 may be defined by the number of pixels in a frame. The image resolution of the camera 110 may comprise any suitable resolution, including of the following resolutions, without limitation: 32x24 pixels; 32x48 pixels; 48x64 pixels; 160x120 pixels, 249x250 pixels, 250x250 pixels, 320x240 pixels, 420x352 pixels, 480x320 pixels, 640x480 pixels, 720x480 pixels, 1280x720 pixels, 1440x1080 pixels, 1920x1080 pixels, 2048x1080 pixels, 3840x2160 pixels, 4096x2160 pixels, 7680x4320 pixels, or 15360x8640 pixels. The resolution of the camera 110 may comprise a resolution within a range defined by any two of the preceding pixel resolutions, for example, within a range from 32x24 pixels to 250x250 pixels (for example, 249x250 pixels). In some embodiments, at least one dimension (the height and/or the width) of the image resolution of the camera 110 can be any of the following, including but not limited to 8 pixels, 16 pixels, 24 pixels, 32 pixels, 48 pixels, 72 pixels, 96 pixels, 108 pixels, 128 pixels, 256 pixels, 360 pixels, 480 pixels, 720 pixels, 1080 pixels, 1280 pixels, 1536 pixels, or 2048 pixels. The camera 110 may have a pixel size smaller than 1 micron, 2 microns, 3 microns, 5 microns, 10 microns, 20 microns, and the like. The camera 110 may have a footprint (for example, a dimension in a plane parallel to a lens) on the order of 10mm x 10mm, 8mm x 8mm, 5mm x 5mm, 4mm x 4mm, 2mm x 2mm, or 1mm x 1mm, 0.8mm x 0.8mm, or smaller.

Each camera 110 is in communication with a computing device 120. Each camera 110 is configured to transmit images or data to a computing device 120. Each camera 110 may be communicatively coupled to a computing device 120. In an alternate example, each camera 110 may communicate wirelessly with a computing device 120, such as via near field communication ("NFC") or other wireless communication technology, such as Bluetooth, Wi-Fi, infrared, or any other suitable technology.

Computing devices 120 comprise a central processing unit 121, a graphics processing unit 122, a memory 123, and a communication application 124. In an example, computing devices 120 may be small, single-board computing devices, such as a Raspberry Pi^{™} device. Computing devices 120 function to receive images or data from cameras 110 and to transmit the images via network 140 to a data processing system 130.

Computing device 120 comprises a central processing unit 121 configured to execute code or instructions to perform the operations and functionality described herein, manage request flow and address mappings, and perform calculations and generate commands. Central processing unit 121 may be configured to monitor and control the operation of the components in the computing device 120. Central processing unit 121 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. Central processing unit 121 may be a single processing unit, multiple processing units, a single processing core, multiple processing cores, special purpose processing cores, co-processors, or any combination thereof. Central processing unit 121 along with other components of the computing device 120 may be a virtualized computing machine executing within one or more other computing machines.

Computing device 120 comprises a graphics processing unit 122 that serves to accelerate rendering of graphics and images in two- and three-dimensional spaces. Graphics processing unit 122 can process multiple images, or data, simultaneously for use in machine learning and high-performance computing.

Computing device 120 comprises a memory 123. Memory 123 may include non-volatile memories, such as read-only memory ("ROM"), programmable read-only memory ("PROM"), erasable programmable read-only memory ("EPROM"), flash memory, or any other device capable of storing program instructions or data with or without applied power. Memory 123 may also include volatile memories, such as random access memory ("RAM"), static random access memory ("SRAM"), dynamic random access memory ("DRAM"), and synchronous dynamic random access memory ("SDRAM"). Other types of RAM also may be used to implement memory 123. Memory 123 may be implemented using a single memory module or multiple memory modules. While memory 123 is depicted as being part of the computing device 120, memory 123 may be separate from the computing device 123 without departing from the scope of the subject technology.

Computing device 120 comprises a communication application 124. Communication application 124 interacts with web servers or other computing devices or systems connected via network 140, including data processing system 130.

Facial expression reconstruction system 100 comprises a data processing system 130. Data processing system 130 serves to receive images or data from cameras 110 via computing devices 120 and network 140. Data processing system 130 comprises a central processing unit 131, a modeling application 132, a data storage unit 133, and a communication application 134.

Data processing system 130 comprises central processing unit 131 configured to execute code or instructions to perform the operations and functionality described herein, manage request flow and address mappings, and perform calculations and generate commands. Central processing unit 131 may be configured to monitor and control the operation of the components in the data processing system 130. Central processing unit 131 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. Central processing unit 131 may be a single processing unit, multiple processing units, a single processing core, multiple processing cores, special purpose processing cores, co-processors, or any combination thereof. Central processing unit 131 along with other components of the data processing system 130 may be a virtualized computing machine executing within one or more other computing machines.

Data processing system 130 comprises a modeling application 132. The modeling application 132 employs a variety of tools, applications, and devices for machine learning applications. The modeling application 132 may receive a continuous or periodic feed of images or data from one or more of the computing devices 120, the central processing unit 131, or the data storage unit 133. Collecting the data allows the modeling application 132 to leverage a rich dataset to use in the development of a training set of data or ground truth for further use in facial expression reconstructions. The modeling application 132 may use one or more machine learning algorithms to develop facial expression reconstructions, such as a convolution neural network ("CNN"), Naive Bayes Classifier, K Means Clustering, Support Vector Machine, Apriori, linear regression, logistic regression, decision trees, random forest, or any other suitable machine learning algorithm.

Data processing system 130 comprises a data storage unit 133. Data storage unit 133 may be accessible by the modeling application 132 and the communication application 134. The example data storage unit 133 can include one or more tangible computer-readable storage devices. The data storage unit 133 can be within the data processing system 130 or can be logically coupled to the data processing system 130. For example, the data storage unit 133 can include on-board flash memory and/or one or more removable memory devices or removable flash memory. In certain embodiments, the data storage unit 133 may reside in a cloud-based computing system.

Data processing system 130 comprises a communication application 134. Communication application 134 interacts with web servers or other computing devices or systems connected via network 140, include the computing devices 120 and user computing device 150.

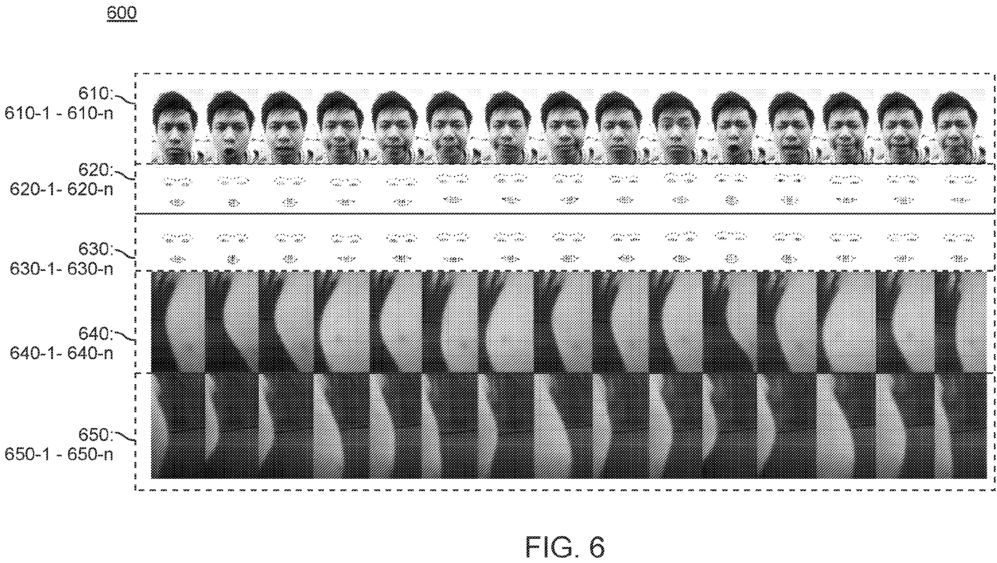

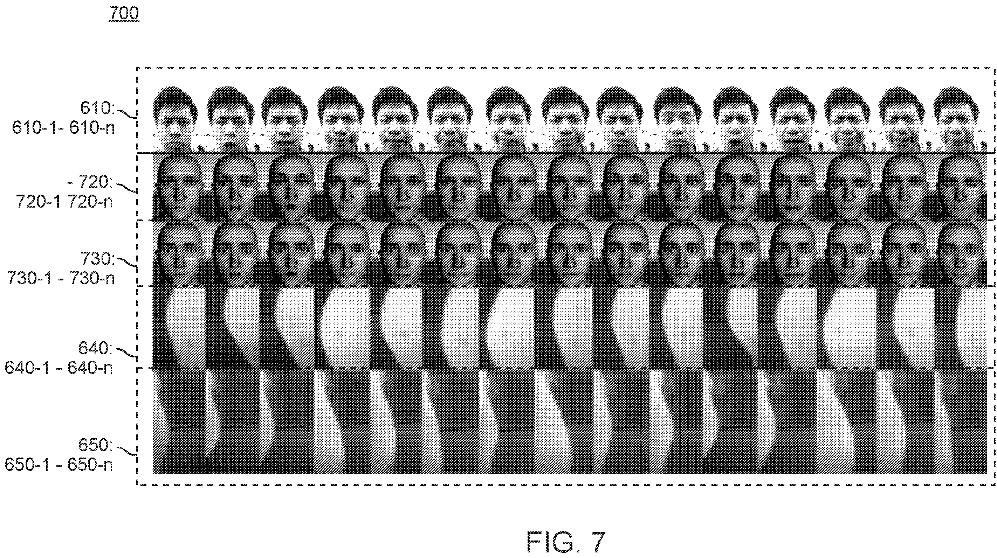

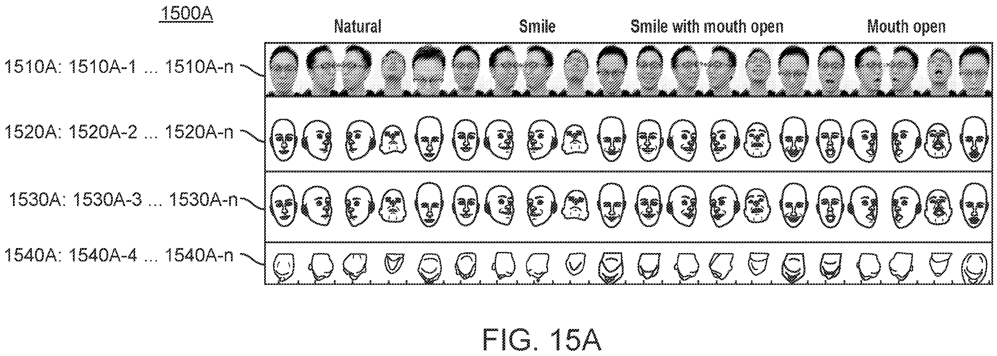

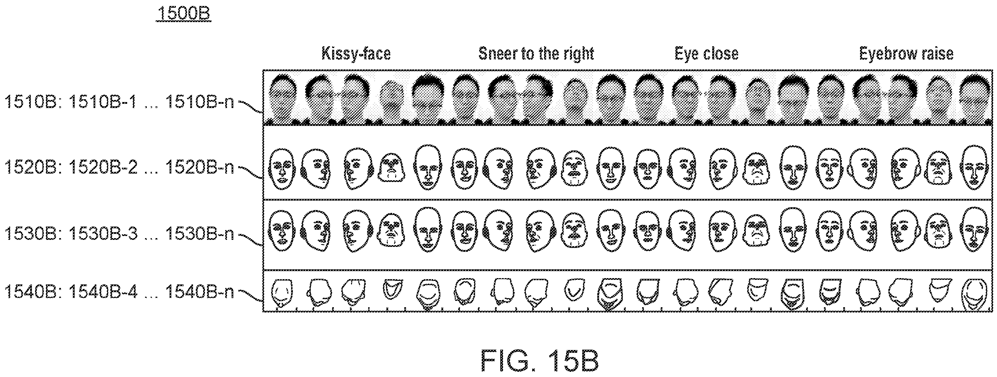

User computer device 150 is a computing device configured to receive and communicate results of facial expression reconstruction. The results of the facial expression reconstruction may be displayed as a graphical representation of a facial expression, such as 630 of Figure 6, a predicted facial expression with three-dimensional visualization, such as 730 of Figure 7, a three-dimensional facial expression, such as 1530A of Figure 15, an emoji, text or audio representing silent speech recognition, or any other suitable display of facial expression reconstructions results. The user computing device 150 also may comprise a speaker to audibly communicate the facial expression reconstructions results directed to silent speech recognition.

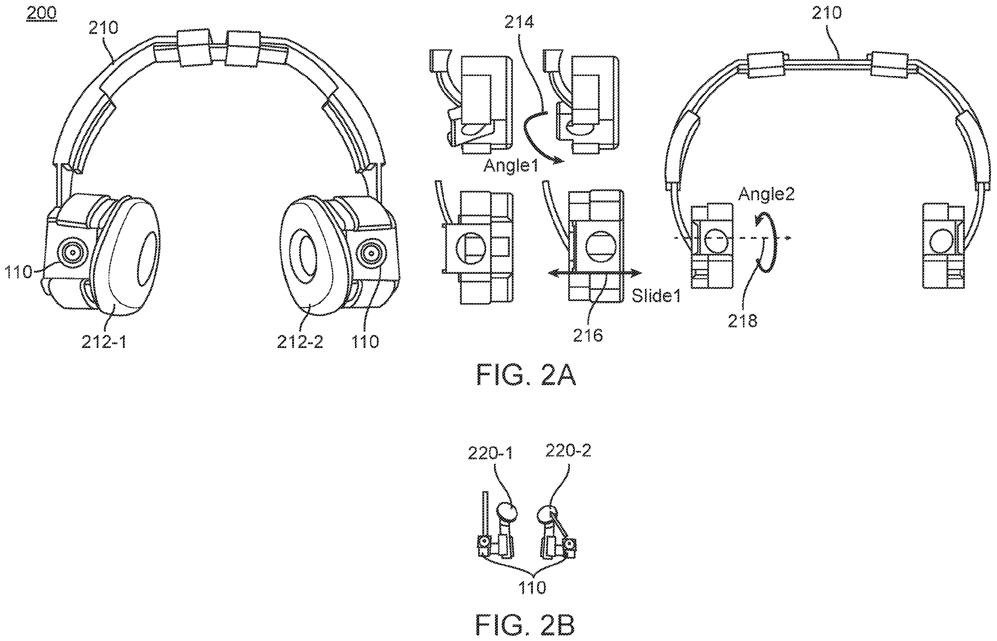

Figure 2, comprising Figures 2A and 2B, is a perspective view of head-mounted wearable devices 210, 220, respectively, for facial expression reconstruction, in accordance with certain examples.

Figure 2A depicts a headphone-style wearable device 210 (herein referred to as headphone device 210) as a form factor to acquire images or data for use in facial expression reconstruction, in accordance with certain examples. Headphone device 210 comprises two cameras 110-1 and 110-2 to acquire images of a left and a right contour, respectively. Cameras 110 were previously described herein with reference to Figure 1. In an example, headphone device 210 is a device constructed of a band 211 suitable to wear across the top of a user's head with a left-side ear piece 212-1 and a right-side ear piece 212-2. In an example, headphone device 210 may be over-the-ear headphones or outside-the-ear headphones. In an example, headphone device 210 may include functionality with Bluetooth or Wi-Fi connectivity and speakers embedded within the earpieces 212. Camera 110-1 is connected to left-side ear piece 212-1, and camera 110-2 is connected to right-side ear piece 212-2. In an alternate example, two cameras 110 are connected to each of the left-side ear piece 212-1 and right-side ear piece 212-2. Any suitable number of cameras may be connected to each of the ear pieces 212. Each camera 110 is in communication with a computing device 120, as previously described with respect to Figure 1. In an example, computing device 120 may be connected to each camera 110 and be embedded within the headphone device 210. In an alternate example, each camera 110 may communicate with a computing device 120 via a wireless technology, such as Bluetooth or Wi-Fi.

Headphone device 210 is configured to acquire images of a left and a right contour of a user's face by directing cameras 110-1 and 110-2 at adjustable angles and positions. Each of the cameras 110 are independently adjustable by a first angle 214, a slide 216, and second angle 218. First angle 214 adjusts a tilt of the position of the camera 110 relative to a plane parallel to an exterior surface of a user's ear. The first angle 214 may be adjusted so that the camera 110/earpiece 212 assembly is tilted closer to a user's ear, or the first angle 214 may be adjusted so that the camera 110 via the earpiece 212 is tilted farther away or offset from a user's ear. In an example, first angle 214 may be 0° indicating that the camera 110/earpiece 212 assembly is in a vertical position relative to a plane parallel to the exterior surface of a user's ear. First angle 214 may be adjusted by -10°, -20°, -30°, -40°, or any suitable angle measure relative to the plane parallel to the exterior surface of a user's ear, such that each camera 110 may be aligned with the left and right contours of a user's face.

Slide 216 adjusts a position of the camera 110 relative to the earpiece 212 in a direction that is perpendicular to a plane parallel to the exterior surface of a user's ear, in other words, the position of the camera 110 may change along the slide 216 while the position of the earpiece 212 is fixed. The position of the camera 110 via the slide 216 may be adjusted such that the earpiece 212 is in close contact with an exterior surface of a user's ear. The position of the camera 110 via the slide 216 may be adjusted such that the camera 110 is extended a distance away from the plane parallel to the exterior surface of a user's ear. In an example, the extended distance may be 1 cm, 2 cm, 3 cm, or any suitable distance away from the plane parallel to the exterior surface of a user's ear. The slide 216 positions the cameras 110 in a manner similar to positioning the earpieces 212 of the headphone device 210. In some embodiments, the position of an imaging sensor or a camera (for example, the optical center of the lens in the camera) is less than 5 cm, less than 4 cm, less than 3 cm, less than 2 cm, less than 1 cm, or less than 0.5 cm away from the surface plane of a user's ear. In some embodiments, the position of an imaging sensor or a camera projected to the closest skin surface is within the region of a user's ear or less than 5 cm, less than 4 cm, less than 3 cm, less than 2 cm, or less than 1 cm away from the nearest contour edge of a user's ear. In some embodiments, the system comprises at least one, at least two, or at least three imaging sensors (for example, cameras) located in different positions as described above. In some embodiments, an imaging sensor, such as a camera, is positioned below a chin of a user and less than 25 cm, less than 20 cm, less than 15 cm, less than 10 cm, or less than 5 cm away from the chin of a user, or 2 - 30 cm below and away from the chin of the user.

Second angle 218 adjusts a rotational position of the camera 110 along a horizontal axis through earpieces 212-1 and 212-2. In an example, second angle 218 adjusts an angular position of the camera 110 relative to the horizontal axis while the position of the earpiece 212 remains unchanged. In an alternate example, second angle 218 adjusts an angular position of the camera 110/earpiece 212 assembly. Relative to a left or right contour of a user's face, second angle 218 may be 0° indicating that the camera 110 is in a horizontal position. A second angle 218 of 10° indicates that the camera 110 is directed 10° upwards. A second angle 218 of -10° indicates that the camera 110 is directed 10° downwards. Any suitable measure of second angle 218 may be used to align the cameras 110 with the contour of a user's face.

Each of the cameras 110 are independently adjustable by the first angle 214 and the second angle 218, by any suitable mechanism, for example, by mounting the cameras 110 to the headphone device 210 via rotational positioning devices allowing incremental changes of the direction of the cameras 110.

Figure 2B depicts earbud-style wearable devices 220-1 and 220-2 (herein referred to as earbud devices 220) as a form factor to acquire images or data for use in facial expression reconstruction, in accordance with certain examples. Earbud device 220-1 is constructed for wear as a left-side earbud, and earbud device 220-2 is constructed for wear as a right-side earbud. In an example, earbud device 220 may be ear pods, earphones, or in-the-ear ("ITE") headphones. Earbud device 220-1 comprises a camera 110-1, and earbud device 220-2 comprises a camera 110-2 to acquire images of a left and a right contour, respectively, of a user's face by directing cameras 110-1 and 110-2 at the left and right contours of a user's face. Cameras 110-1 and 110-2 were previously described in reference to Figure 1. In an example, earbud devices 220 may include functionality with Bluetooth or Wi-Fi connectivity and speakers embedded within the earbuds 220. Each camera 110 is in communication with a computing device 120, as previously described with respect to Figure 1. In an example, a computing device 120 may be connected to each camera 110 and be embedded within each earbud device 220. In an alternate example, each camera 110 may communicate with a computing device 120 via a wireless technology, such as Bluetooth or Wi-Fi.

The camera 110 position for each earbud device 220 may be controlled by twisting and/or rotating the earbud device 220 in the user's ear. The earbud device 220 may be rotated such that the camera 110 is angled closer to the contour of a user's face. In an alternate example, the camera 110 may be attached to the earbud device 220 such that the camera 110 may be positioned independently of the earbud device 220. The camera 110 may be attached to the earbud device 220 with a ball and socket joint or any other suitable attachment method such that the position of the camera 110 may be adjusted independently of the earbud device 220.

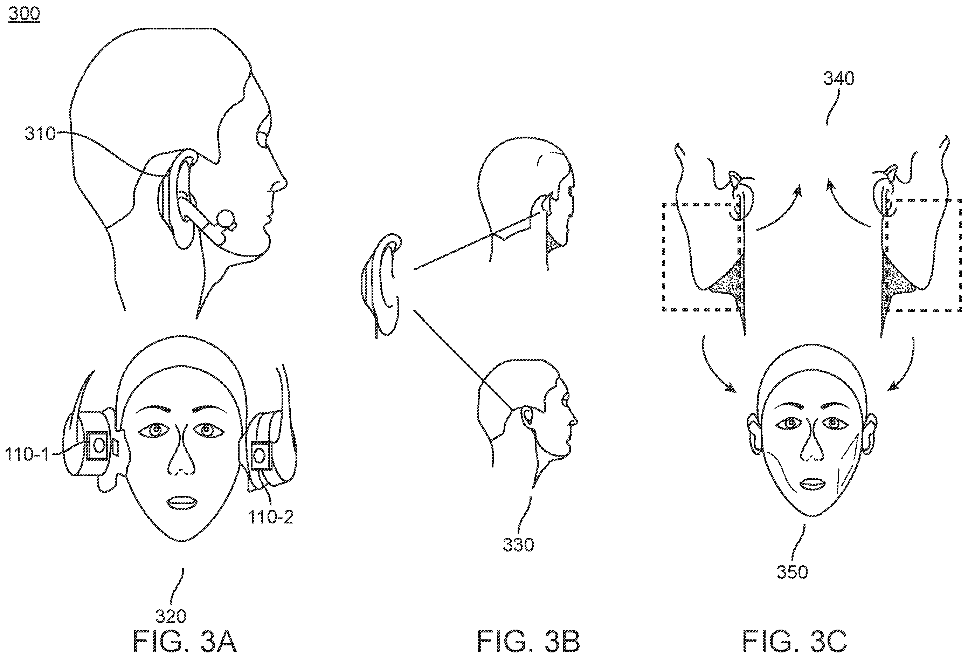

Figure 3, comprising Figures 3A, 3B, and 3C, is an illustration depicting examples 310-350 of head-mounted, wearable devices 210, 220 on a user, camera views 330, captured facial contours 340, and corresponding facial expressions 350, in accordance with certain examples. In Figure 3A, earbuds 220 are illustrated in a closeup view of the back of a user's ear. Camera 110 of the earbuds 220 is illustrated in this example as being positioned in a forward direction towards a right contour of a user's face. Although not depicted in Figure 3A, a second earbud 210 is worn by the user in the opposite, left ear, having a camera 110 positioned in a forward direction towards a left contour of the user's face.

Also in Figure 3A, alternative headphone 210 is illustrated in a closeup view from a front perspective of the user. Cameras 110-1 and 110-2 of the headphone 210 are illustrated in this example as being positioned in a forward direction towards left and right contours of a user's face.

Figure 3B depicts a back and side view of a user to illustrate the contour of the user's face from the point of view of a camera 110 in either the earbud device 220 or headphone device 210 depicted in Figure 3A.

Figure 3C depicts the left and right contours of a user's face as captured by cameras 110 through the use of the headphone 210 or the earbuds 220. Figure 3B also depicts the facial expression of a user a reconstructed through the images captured by cameras 110 through the use of the headphone 210 or the earbuds 220.

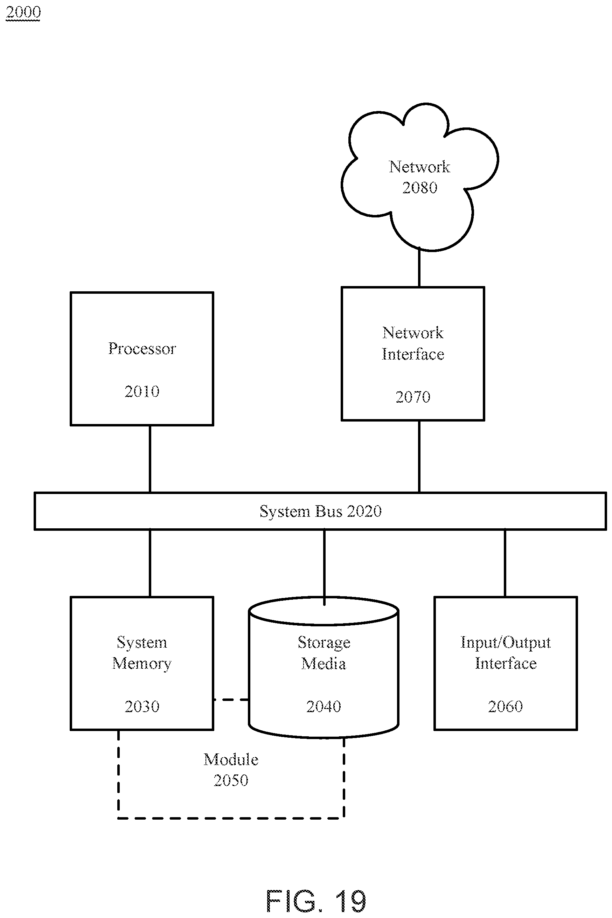

The computing devices 120, 130, and 150 and any other network computing devices other computing machines associated with the technology presented herein may be any type of computing machine, such as, but not limited to, those discussed in more detail with respect to Figure 19. For example, each device can include any suitable processor-driven device.

Furthermore, any functions, applications, or components associated with any of these computing machines, such as those described herein or others (for example, scripts, web content, software, firmware, hardware, or modules) associated with the technology presented herein may be any of the components discussed in more detail with respect to Figure 19.

The network connections illustrated are examples and other means of establishing a communications link between the computers and devices can be used. The computing machines discussed herein may communicate with one another, as well as with other computing machines or communication systems over one or more networks. Each network may include various types of data or communications networks, including any of the network technology discussed with respect to Figure 19.

Additionally, those having ordinary skill in the art having the benefit of the present disclosure will appreciate that the devices illustrated in the figures may have any of several other suitable computer system configurations.

### Example Processes

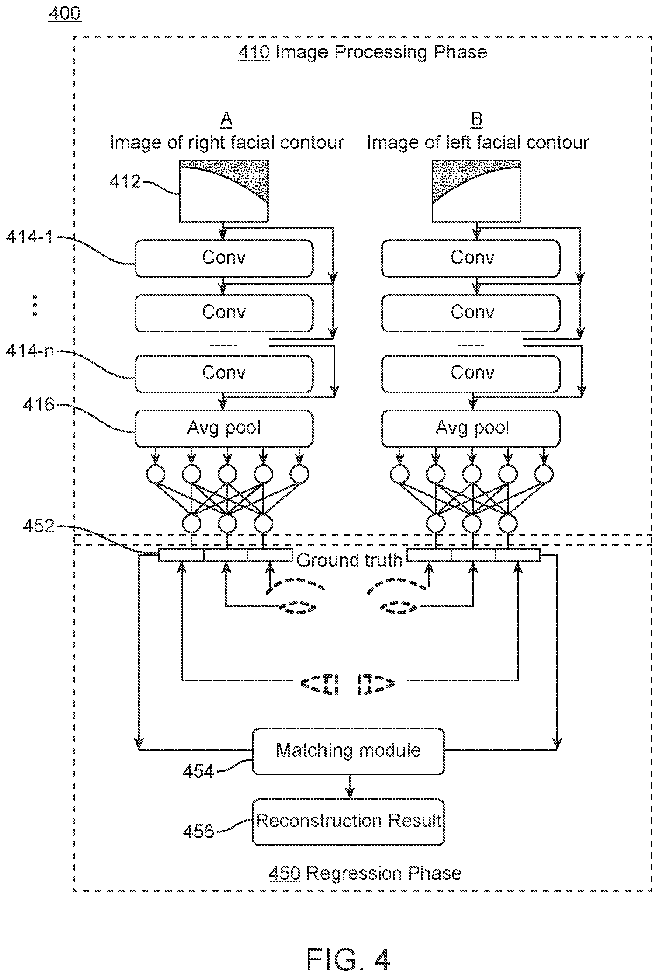

The methods illustrated in Figures 4 through 11 are described hereinafter with respect to the components of facial expression reconstruction system 100, headphone device 210 of Figure 2A, and earbud devices 220 of Figure 2B. The methods of Figures 4 through 11 may also be performed with other systems and in other environments. The operations described with respect to Figures 4 through 11 can be implemented as executable code stored on a computer- or machine-readable, non-transitory, tangible storage medium (for example, floppy disk, hard disk, ROM, EEPROM, nonvolatile RAM, CD-ROM, etc.) that are completed based on execution of the code by a processor circuit implemented using one or more integrated circuits; the operations described herein also can be implemented as executable logic that is encoded in one or more non-transitory, tangible media for execution (for example, programmable logic arrays or devices, field programmable gate arrays, programmable array logic, application specific integrated circuits, etc.).

Figure 4 is a block diagram depicting a deep-learning model process 400, in accordance with certain examples. The deep-learning model process 400 may be performed by the modeling application 132 of the data processing system 130, previously described herein in reference to Figure 1. In an example where the machine learning algorithm is a convolution neural network ("CNN"), the deep-learning model process 400 receives images as an input and assigns importance (learnable weights and biases) to various aspects/objects in the images. The CNN reduces the images into a form that is easier to process without losing the features of the images that are used to get a good prediction. In the current example, the prediction is a reconstructed facial expression based on the received right and left contour facial images.

The deep-learning model process 400 comprises an image processing phase 410 and a regression phase 450. In the image processing phase 410, image processing is divided into two parallel paths. Path A is directed to processing an image of a right facial contour, and path B is directed to processing an image of a left facial contour. The right facial contour images and left facial contour images are processed independently of each other and combined in block 454 of the deep-learning model process 400.

In block 412, the data processing system 130 receives an input of an image of a right facial contour and an input of an image of a left facial contour. Example right facial contour images are depicted in row 640 of Figures 6 and 7, and example left facial contour images are depicted in row 650 of Figures 6 and 7. The images are transmitted through blocks 414-1 through 414-n. Blocks 414-1 through 414-n comprise layers of the CNN that include multiple convolution filtering operations. In an example, the CNN may comprise between 32 and 512 layers to extract features from the images. The first convolution layer in block 414-1 captures low-level features, such as edges, color, and gradient orientation. As the process progresses through the additional layers to layer 414-n, higher-level features are captured such that the object of the image is captured. In the current example, the object of the image is a facial contour.

From block 414-n, the process proceeds to block 416. Block 416 is a pooling layer. The pooling layer may be a Max Pooling that returns a maximum value from the image. The pooling layer may be an Average Pooling that returns an average of all of the values from the image. The pooling layer of block 416 outputs a vector representation of each input image (in other words, a right image vector for the right facial contour and a left image vector for the left facial contour).

The right image vector and the left image vector are received as inputs to the regression phase 450. Within the regression phase 450, the right image vector and the left image vector are inputs into two fully connected layers 452 with a rectified linear unit ("ReLU") between the fully connected layer 452. The fully connected layer 452 learns facial landmarks of the right image vector and the left image vector based on facial landmarks in a training data set, or ground truth, set of facial expressions. The fully connected layer 452 compares features of the right image vector to right side facial landmarks in the training data set of facial expressions to match the features of the right image vector to a right side facial expression in the training data set. Similarly, the fully connected layer 452 compares features of the left image vector to left side facial landmarks in the training data set of facial expressions to match the features of the left image vector to a left side facial expression in the training data set. The fully connected layer 452 outputs landmarks of both the right and left side of a user's face. The output landmarks are inputs to a matching module 454. The matching module 454 concatenates the landmarks from the right and left sides by aligning key landmarks that are present in both the right and left sides using translation and scaling. The matching module 454 outputs the final facial expression reconstruction, or predicted facial expression, as a set of facial landmarks as the reconstruction result in block 456. Examples of predicted facial expressions as a set of facial landmarks are depicted in row 630 of Figure 6. In an alternate example, the facial expression reconstruction is further modeled to create a three-dimensional visualization of the predicted facial expression as depicted in row 730 of Figure 7. The process 400 continues to repeat as additional right facial contour images and left facial contour images are received.

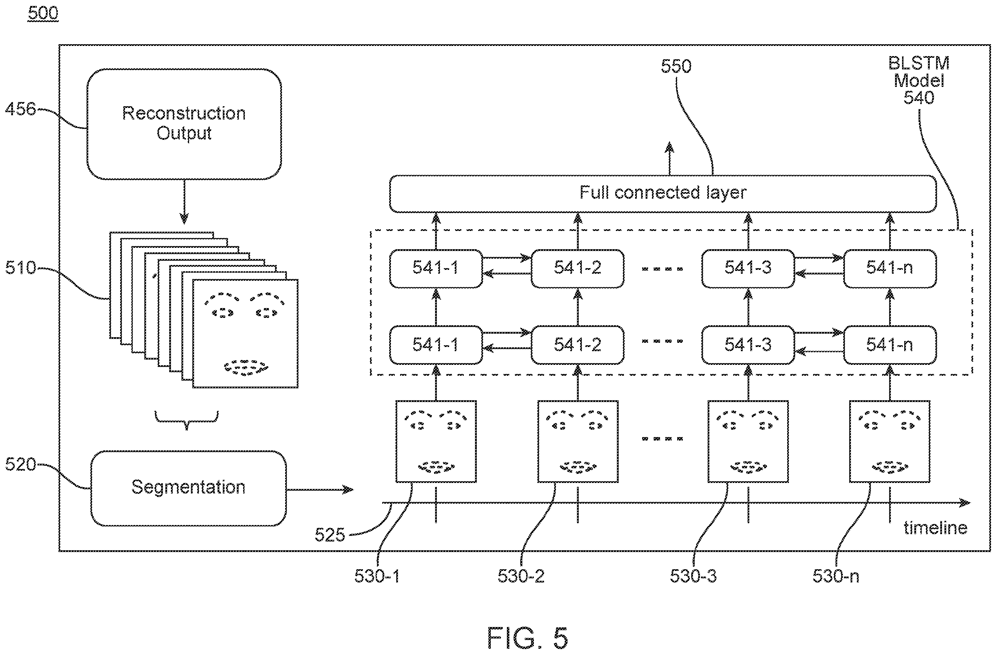

Figure 5 is a block diagram depicting a classifier process 500, in accordance with certain examples. The classifier process 500 classifies the facial expression reconstruction output 456 of the deep-learning model process 400 for use in applications such as silent speech recognition, emoji input, real-time avatar facial expressions, or other suitable applications. In block 510, the reconstruction output 456 from the deep-learning model process 400 (Figure 4) is received as input to the classifier process 500. In block 510, a stream of landmark positions from the reconstruction output 456 are received as frames. In block 520, the landmark positions are segmented. Segmentation extracts an event from a stream of data and labels its start and end time. In the example of silent speech recognition, segmentation would identify the initial facial expression associated with the pronunciation of a word and the final facial expression associated with the pronunciation of the same word. For each frame, two indicators are calculated to measure the degree of transformation for the mouth and eyes, known as the Mouth Transformation Degree ("MTD") and Eye Transformation Degree ("ETD"). The MTD and ETD are calculated by summing the differences between the landmarks outlining the mouth or eye/eyebrow at the time and the landmarks of the natural facial expression. Then, a lowpass filter is applied to filter out high-frequency noise. When an event happens, the MTD or ETD raises to a single peak or a primary peak with several secondary peaks. A peaking seeking algorithm is applied to find the peaks in the stream. Thresholds are set for peak height, peak prominence, and peak width to filter peaks that may be associated with noise. After finding peak positions, the fist-order difference of the ETD and MTD are calculated. In the first-order difference sequence, the left nearest peak to the event is labeled as the beginning, and the right nearest valley to the event is labeled as the end. The frames associated with the event are placed sequentially on a timeline 525 as frames 530-1 through frames 530-n.

After the sequential placement of frames 530-1 through 530-n, the process 500 proceeds to block 540 where the frames are inputs into a Bidirectional Long Short-Term Memory ("BLSTM") model for classification. Block 540 depicts a two-layer BLSTM model. However, any suitable number of layers may be used. The blocks 541-1 through 541-n depicted within the BLSTM model 540 are recurrently connected memory blocks. Each of the blocks 541 have feedback connections such that sequences of data can be processed as opposed to single images or data points. As depicted in block 540, blocks 541-1 through 541-n comprise bidirectional connections within each of the blocks 541 in each layer of block 540. Processing sequences of data allows for speech recognition, emoji recognition, real-time avatar facial expressions, or other suitable applications. The output from block 540 is a vector representation of the input frames.

In block 550, the vector representation is received by a fully connected layer comprising a SoftMax function. The SoftMax function transforms the vector representation into a probability distribution to predict a facial event. The output from block 550 is an encoding of a facial event class. The facial event classification may be a facial expression. In the example of silent speech recognition, the facial event classification may be the pronunciation of a specific word or phrase, such as "hello" or "how are you." In the example of emoji recognition, the facial event classification may be an emoji indicating a smiling face, a frowning face, a crying face, or any other suitable emoji associated with a facial expression. In the example of real-time avatar facial expressions, the facial event classification may be a three-dimensional visualization of a facial expression.

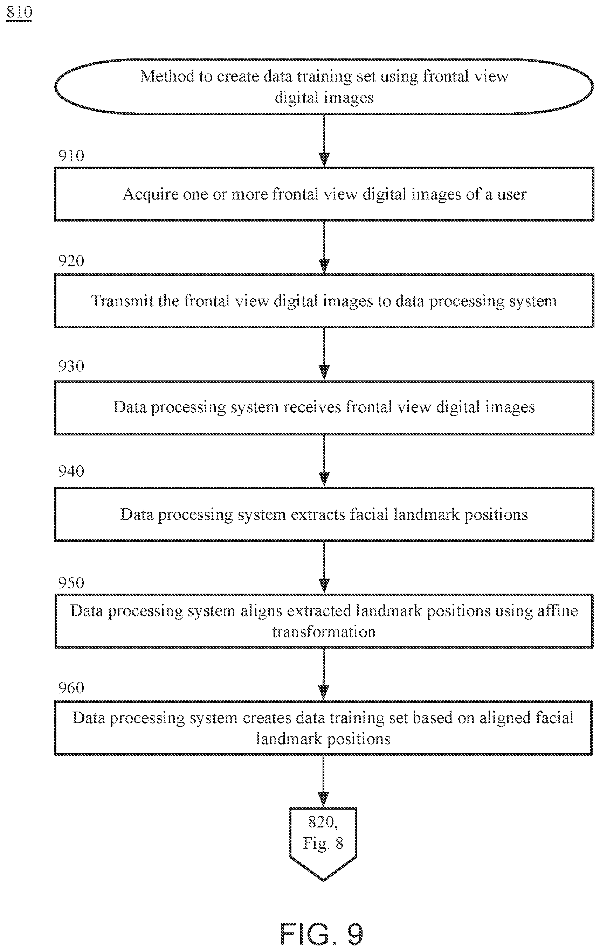

Figure 6 is a diagram 600 depicting the correlation between frontal view camera images 610, landmark training data 620, predicted facial expressions 630, and captured right and left facial contour images 640, 650, in accordance with certain examples. Row 610 illustrates frontal view camera images of a user. To construct a training data set or "ground truth," frontal view camera images of a user are acquired, via an imaging capturing device, with the user making various different facial expressions as depicted in images 610-1 through 610-n. The method to create the training data set from the frontal view camera images is described herein in greater detail with reference to method 810 of Figure 9. Row 620 illustrates a training data set in the form of facial landmarks. The landmark training data images depicted in images 620-1 through 620-n correlate with images 610-1 through 610-n. The landmark training data images 620 are the output of method 810 of Figure 9.

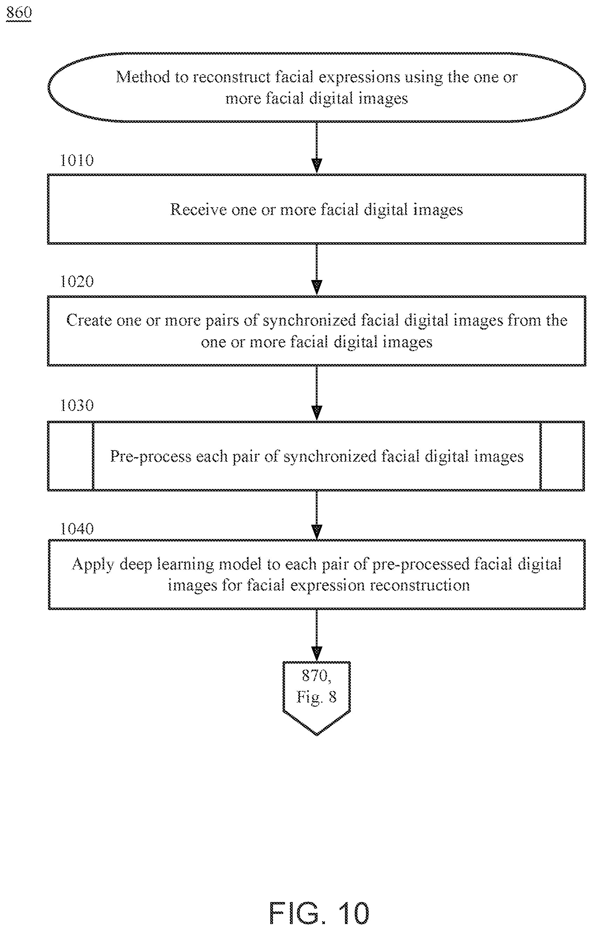

Row 640 depicts right facial contour images 640-1 through 640-n captured by a head-mounted, wearable device, such as headphone device 210 or earbud device 220 described herein with reference to Figure 2. Row 650 depicts left facial contour images 650-1 through 650-n captured by a head-mounted, wearable device, such as headphone device 210 or earbud device 220 described herein with reference to Figure 2. The right and left facial contour images 640, 650 are synchronized such that the images are representing the same facial expression. The synchronization of the images is described in greater detail herein with reference to block 1020 of Figure 10. The synchronized images are used as inputs to the deep-learning process 400, previously described herein with reference to Figure 4.

The right facial contour images 640, the left facial contour images 650, and the landmark training data images 620 are used in the deep-learning model process 400 to construct the predicted facial expressions in row 630. The predicted facial expressions 630 are depicted as landmark images in images 630-1 through 630-n. The predicted facial expressions 630 are illustrated in Figure 6 beneath the landmark training data images 620 to illustrate the accuracy of predicting facial expressions using right facial contour images 640 and left facial contour images 650 acquired from headphone device 210 or earbud device 220.

Figure 7 is a diagram 700 depicting the correlation between frontal view camera images 610, training data with three-dimensional visualization 720, predicted facial expressions with three-dimensional visualization 730, and right and left facial contour images 640, 650, in accordance with certain examples. Figure 7 is an alternate embodiment of Figure 6, wherein training data images with three-dimensional visualization are depicted in row 720 and predicted facial expressions with three-dimensional visualization are depicted in row 730. The training data images 720-1 through 720-n are correlated with predicted facial expression images 730-1 through 730-n. The three-dimensional visualizations depicted in blocks 720 and 730 are created using the facial landmarks described in rows 620 and 630 in reference to Figure 6. The facial landmarks are input into a three-dimensional modeling application to create a three-dimensional visualization of the training data and the predicted facial expressions.

Figure 6 and Figure 7 present two-dimensional and three-dimensional correlations between training data and predicted facial expressions. Any suitable correlation can be made based on the type of camera used and the type of data collected. For example, correlations can be made based on imaging data such as thermal gradients or acoustic reflections.

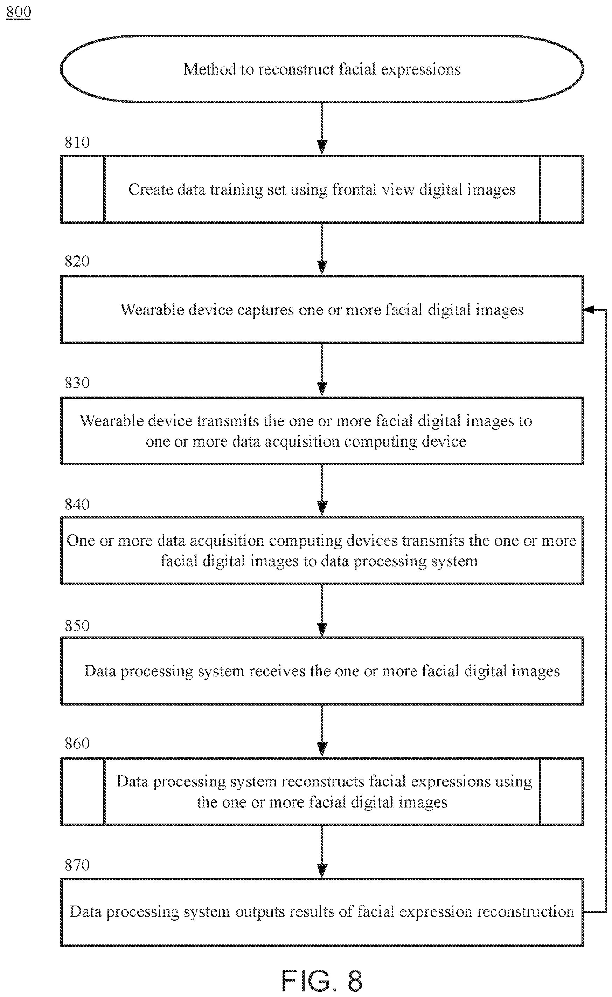

Figure 8 is a block flow diagram depicting a method 800 to reconstruct facial expressions, in accordance with certain examples. In block 810, a data training set is created using frontal view digital images. Block 810 is described in greater detail in method 810 of Figure 9.

Figure 9 is a block flow diagram depicting a method 810 to create a data training set using frontal view digital images, in accordance with certain examples. In block 910, one or more frontal view digital images are acquired of a user. The one or more frontal view digital images depict the user making a variety of facial expressions. For example, the user may smile, frown, squint, close one or both eyes, make an angry facial expression, raise one or both eyebrows, or any other suitable expressions such that the one or more frontal view digital images represent a wide range of potential facial expressions. Example frontal view digital images are depicted in row 610 of Figure 6. The user may take the one or more frontal view digital images of himself, another person may take the one or more frontal view digital images, or any other suitable method to acquire the one or more frontal view digital images may be used. The one or more frontal view digital images may be taken by any device or sensor capable of capturing a digital image including, but not limited to, depth cameras, red-green-blue ("RGB") cameras, infrared ("IR") sensors, thermal imaging sensors, charge-coupled devices ("CCDs"), complementary metal oxide semiconductor ("CMOS") devices, active-pixel sensors, radar imaging sensors, fiber optics, and any other suitable image device technology.

In block 920, the frontal view digital images are transmitting to data processing system 130. The frontal view digital images may be transmitted to the data processing system 130 by a user's computing device, such as user computer device 150, or any other suitable device to transmit data.

In block 930, the data processing system 130 receives the frontal view digital images.

In block 940, the data processing system 130 extracts facial landmark positions. To extract the facial landmark positions, the data processing system 130 uses a computer vision library as a ground truth acquisition method. In an example, the computer vision library is a Dlib library. The computer vision library is used to extract key feature points or landmarks from the frontal view digital images. The computer vision library may extract 42, 68, or any suitable number of key feature points.

In block 950, the data processing system 130 aligns the extracted landmark positions using an affine transformation. Aligning the extracted landmark positions accounts for variations in a user's head position in the frontal view digital images. When a user acquires the frontal view digital images as described in block 910, the same facial expressions may vary if the user slightly changes his face orientation. To align the extracted landmark positions, a set of landmarks are selected whose relative positions change very little when making facial expressions. For example, the selected landmarks may be one or more of a right canthus, left canthus, or apex of the nose. The selected landmarks are used to calculate an affine matrix for each frontal view digital image. The landmark positions are aligned to the same range to reduce the influence of head position change when the frontal view digital images are acquired.

In block 960, the data processing system 130 creates the data training set based on the aligned facial landmark positions. In an example, after the extracted landmark positions are aligned, the data processing system 130 selects the most informative feature points from the extracted landmark positions. In an example, the Dlib library may extract 68 facial landmarks from each of the frontal view digital images. When making facial expressions, changes mainly occur in the areas around the mouth, eyes, and eyebrows. The less informative features points may be removed, leaving a smaller set of facial landmarks, such as 42 facial landmarks. Any suitable number of facial landmarks may be used. The data training set is the set of the most informative landmark positions for each facial expression from each of the frontal view digital images. Example data training set images are depicted in row 620 of Figure 6. In an alternate example, the facial expression reconstruction is further modeled to create a three-dimensional visualization of the training data images as depicted in row 720 of Figure 7. In an example, the data processing system saves the data training set in the data storage unit 133. In some embodiments, the system may extract information of at least 10, at least 20, at least 30, at least 40, at least 50, at least 60, at least 70, at least 80, at least 90, or at least 100 parameters or features from one or more images captured by one or more imaging sensors for a facial expression, wherein the parameters or features comprise facial landmark positions, shape parameters (for example, blendshape parameters ), orientations (for example, head orientations), or any combination thereof.

Figure 6 depicts frontal view digital images of a user at row 610, which are used to create the corresponding data training set depicted in row 620. In an alternate example, training data with three-dimensional visualization, as depicted in row 720 of Figure 7, may be utilized. Any suitable method or visualization may be used to create the data training set.

From block 960, the method 810 returns to block 820 of Figure 8.

Referring back to Figure 8, in block 820, a wearable device captures one or more facial digital images. In an example, the wearable device may be a head-mounted device, such as headphone device 210 or earbud device 220, previously described herein with reference to Figure 2. The head-mounted device is configured to capture right facial contour images and left facial contour images of a user's face directed towards the right and left cheekbones using two or more cameras 110. In the current example, the right and left facial contour images are two-dimensional images of the contour of a user's face. Example right and left facial contour images are depicted in rows 640 and 650, respectively, of Figures 6 and 7.

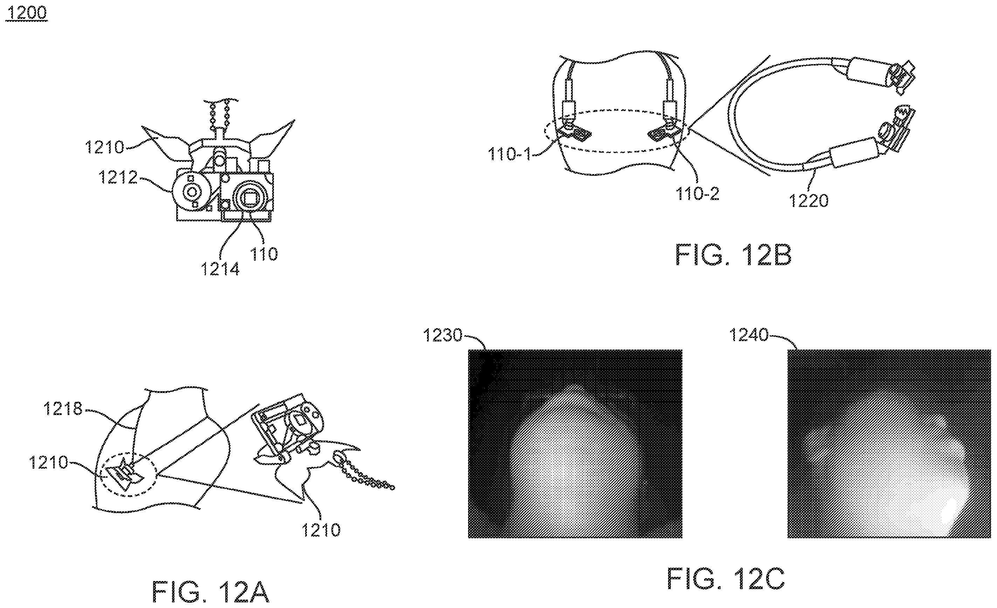

In an alternate example, the wearable device may be a neck-mounted device such as necklace device 1210 or neckband device 1220, described hereinafter with reference to Figure 12. The neck-mounted device is configured to take digital images of the contour of a user's face directed towards the user's chin using one or more cameras 110.

In block 830, the wearable device transmits the one or more facial digital images to one or more data acquisition computing devices 120. As depicted and described in reference to Figure 1, each camera 110 is in communication with a data acquisition computing device 120.

In block 840, the one or more data acquisition computing devices 120 transmits the one or more facial digital images to the data processing system 130.

In block 850, the data processing system 130 receives the one or more facial digital images.

In block 860, the data processing system 130 reconstructs facial expressions using the one or more facial digital images. Block 860 is described in greater detail herein with reference to method 860 of Figure 10.

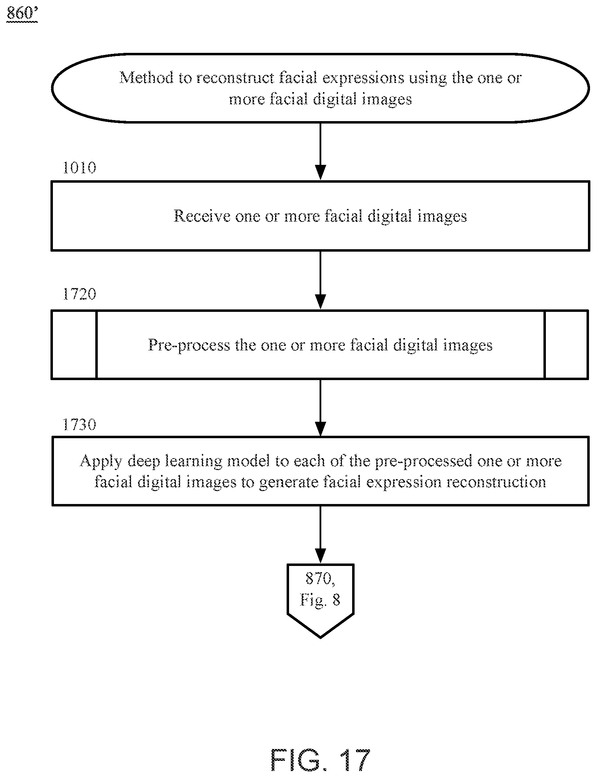

Figure 10 is a block flow diagram depicting a method 860 to reconstruct facial expressions using one or more facial digital images, in accordance with certain examples. The examples of Figure 10 are directed to the method to reconstruct facial expressions from one or more facial digital images received from a head-mounted wearable device. An alternate method to reconstruct facial expressions from one or more facial digital images received from a neck-mounted wearable device is described herein with reference to method 860' of Figure 17.

In block 1010, the data processing system 130 receives the one or more facial digital images.

In block 1020, the data processing system 130 creates one or more pairs of synchronized facial digital images from the one or more facial digital images. In the example where the one or more facial digital images are acquired from a head-mounted wearable device, the wearable device captures right facial contour images and left facial contour images. To accurately reconstruct a facial expression of a user, the data processing system 130 synchronizes the images from the left camera 110-1 and the right camera 110-2 such that each pair of right and left facial contour images represents a particular facial expression.

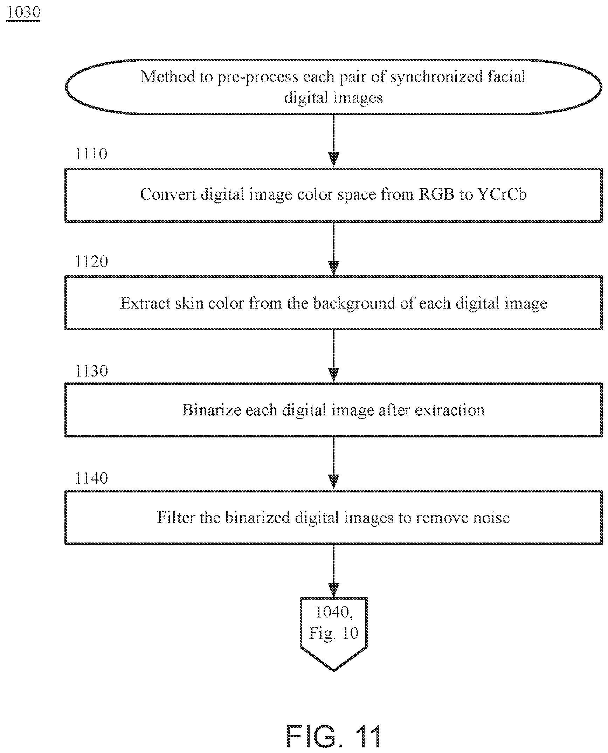

In block 1030, the data processing system 130 pre-processes each pair of synchronized facial digital images. Block 1030 is described in greater detail herein with reference to method 1030 of Figure 11.

Figure 11 is a block flow diagram depicting a method 1030 to pre-process each pair of synchronized facial digital images, in accordance with certain examples. In block 1110, the data processing system 130 converts a digital image color space of each pair of synchronized facial digital images from a red-green-blue ("RGB") color space to a luminance, chrominance (red-yellow), chrominance (blue-yellow) ("YCrCb") color space. The YCrCb color space is used to take advantage of a lower resolution with respect to luminosity amount of data stored with respect to each pair of synchronized facial digital images. The conversion from the RGB color space to the YCrCb color space is accomplished using a standard process.

In block 1120, the data processing system 130 extracts skin color from the background of each converted pair of facial digital images. In an example, the skin color is extracted using Otsu's thresholding method. Otsu's thresholding method determines whether pixels in an image fall into a foreground or a background. In the current example, the foreground represents a facial contour of each facial digital image, and the background represents an area of the image outside of the facial contour.

In block 1130, the data processing system 130 binarizes each facial digital image after the extraction of the skin color from the background. Image binarization is the process of taking the image in YCrCb color space and converting it to a black and white image. The binarization of the image allows for an object to be extracted from an image, which in this example is a facial contour.

In block 1140, the data processing system 130 filters the binarized digital images to remove noise from the images. Filtering the binarized digital images produces a smoother image to assist in more accurate facial expression reconstructions.

From block 1140, the method 1030 returns to block 1040 of Figure 10. Referring back to Figure 10, in block 1040, the data processing system 130 applies a deep-learning model to each pair of pre-processed facial digital images for facial expression reconstruction. The deep-learning model for facial expression reconstruction was described in detail herein in the deep-learning model process 400 with reference to Figure 4 and in the classifier process 500 with reference to Figure 5. The results of the facial expression reconstruction from block 1040 may include the reconstruction output from block 456 of Figure 4 and/or the encoding of a facial event class from block 550 of Figure 5. For example, the data processing system 130 may output from block 1040 the landmark images from the process 400 of Figure 4. The data processing system 130 also, or alternatively, may further process the facial expression reconstruction such that the output from block 1040 comprises a three-dimensional visualization of the facial expression, silent speech recognition, an emoji associated with the facial expression reconstruction, and/or real-time avatar facial expressions associated with the facial expression reconstruction, such as described by the classifier process 500 of Figure 5.

From block 1040, the method 860 returns to block 870 of Figure 8. Referring back to Figure 8, in block 870, the data processing system 130 outputs the results of the facial expression reconstruction. In an example, the results may be sent to user computing device 150 to be displayed visually or audibly to a user. In an example, the results of the facial expression reconstruction may be displayed as a graphical representation of a facial expression, such as row 630 of Figure 6; a predicted facial expression with three-dimensional visualization, such as row 730 of Figure 7; a three-dimensional facial expression, such as row 1530A of Figure 15; an emoji; text representing silent speech recognition; or any other suitable display of facial expression reconstructions results. User computing device 150 may comprise a speaker to audibly communicate the facial expression reconstructions results directed to silent speech recognition.

From block 870 of Figure 8, the method 800 returns to 820 where the method 800 repeats the process of reconstructing facial expressions by capturing additional facial digital images.

### Other Example Architectures

Figure 12, comprising Figures 12A, 12B, and 12C, is a perspective view of neck-mounted wearable devices 1210, 1220 for facial expression reconstruction with example IR images 1230 and 1240, in accordance with certain examples.

Figure 12A depicts a necklace style neck-mounted wearable device 1210 (herein referred to as necklace device 1210) as a form factor to acquire images or data for use in facial expression reconstruction. Necklace device 1210 comprises a camera 110, previously described herein in reference to Figure 1. In the current example, camera 110 is an infrared ("IR") camera. Necklace device 1210 also comprises an IR LED 1212 and an IR bandpass filter 1214. Necklace device 1210 is configured to acquire images of a user's chin profile by directing the camera 110 at the profile of a user's chin. The IR LED 1212 projects IR light onto a user's chin to enhance the quality of the image captured by camera 110. The IR bandpass filter 1214 filters visible light such that camera 110 captures infrared light reflected by the skin of a user.

Necklace device 1210 comprises a chain 1218 or other suitable device for securing the necklace device 1210 about the neck of a user. In an alternate example, necklace device 1210 may attach to a user's clothing instead of being secured about the neck of a user. In the current example, necklace device 1210 may be attached to a user's clothing underneath the user's chin. In an alternate example, multiple necklace devices 1210 may be attached to a user's clothing to capture camera 110 images from multiple viewpoints. In the current example, a necklace device 1210 may be attached on a user's clothing close to each shoulder of the user. The necklace device 1210 may comprise a clip, a pin, a clasp, or any other suitable device to attach necklace device 1210 to a user's clothing.

The camera 110 is in communication with a computing device 120, as previously described with respect to Figure 1. In an example, a computing device 120 may be connected to the camera 110 and be embedded within the necklace device 1210. In an alternate example, the camera 110 may communicate with a computing device 120 via a wireless technology, such as Bluetooth or Wi-Fi.

Figure 12B depicts a neckband style neck-mounted wearable device 1220 (herein referred to as neckband device 1220) as a form factor to acquire images or data for use in facial expression reconstruction. Neckband device 1220 comprises two cameras 110-1 and 110-2 fashioned to be positioned on the left and right sides of a user's neck. Neckband device 1220 also comprises IR LEDs and IR bandpass filters configured in proximity to each camera 110-1 and 110-2 (not depicted in Figure 12). In an example, neckband device 1220 may include functionality with Bluetooth or Wi-Fi connectivity and speakers embedded within the neckband 1220. Each camera 110 is in communication with a computing device 120, as previously described with respect to Figure 1. In an example, a computing device 120 may be connected to each camera 110 and be embedded within the neckband device 1220. In an alternate example, each camera 110 may communicate with a computing device 120 via a wireless technology, such as Bluetooth or Wi-Fi.

Figure 12C depicts two example IR images 1230 and 1240. Example 1230 is an IR image acquired from necklace device 1210. Example 1240 is a right camera 110 IR image acquired from neckband device 1220. Additional examples of IR images acquired by either necklace device 1210 or neckband device 1220 are depicted in row 1540A of Figure 15A and row 1540B of Figure 15B.

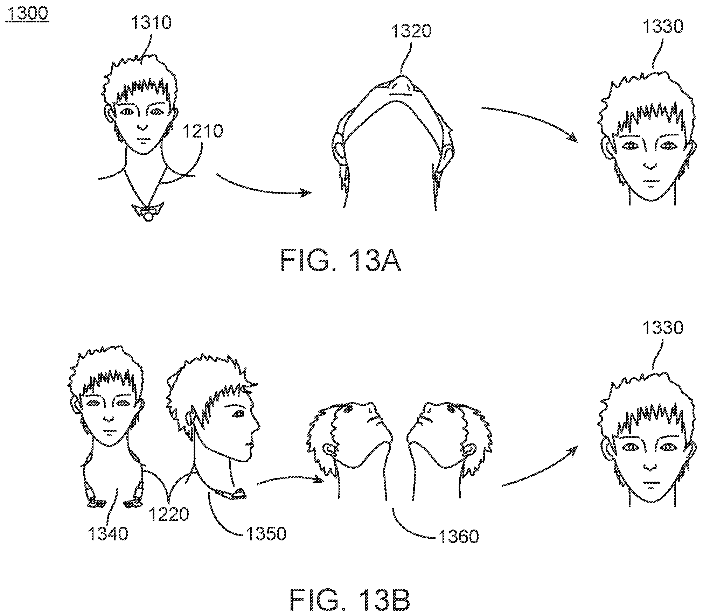

Figure 13, comprising Figures 13A and 13B, is an illustration 1300 depicting examples 1310-1360 of neck-mounted wearable devices 1210, 1220 on a user, camera views 1320 and 1360, and corresponding facial expressions 1330, in accordance with certain examples. In Figure 13A, example 1310 illustrates a necklace device 1210 as being worn by a user in a front view of the user. Example 1320 illustrates a view of the user as captured by camera 110 of the necklace device 1210. The corresponding example 1330 illustrates a reconstructed facial expression based on IR images captured by the necklace device 1210.

In Figure 13B, example 1340 illustrates a neckband device 1220 as being worn by a user in a front view of the user. Example 1350 illustrates a neckband device 1220 as being worn by a user in a right-side view of the user. Example 1360 illustrates two views of the user as captured by cameras 110-1 and 110-2 of the neckband device 1220. The corresponding example 1330 illustrates a reconstructed facial expression based on IR images captured by the necklace device 1220.

### Other Example Processes

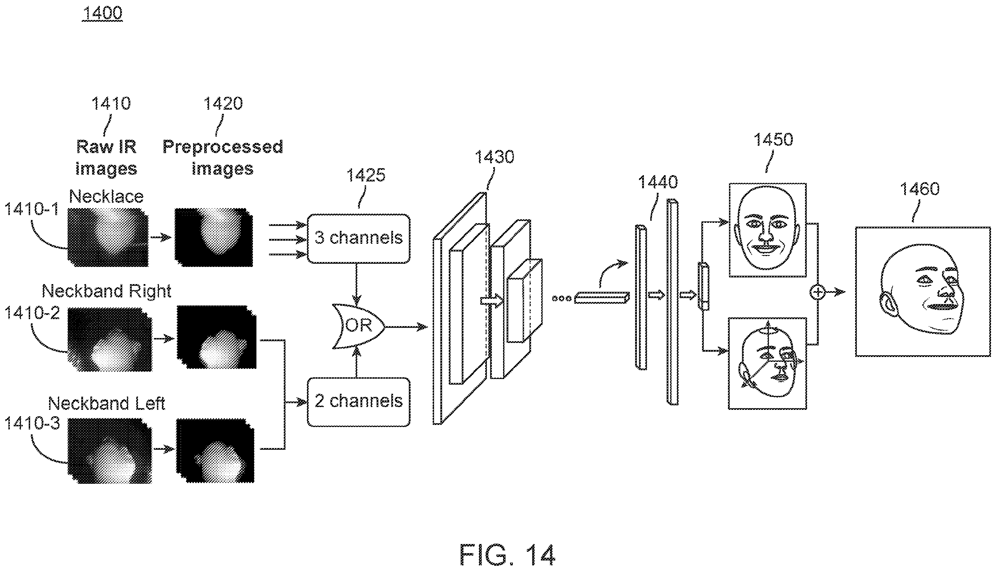

The methods illustrated in Figures 14 through 18 are described hereinafter with respect to the components of facial expression reconstruction system 100, necklace device 1210 of Figure 12A, and neckband device 1220 of Figure 12B. The methods of Figures 14 through 18 may also be performed with other systems and in other environments. The operations described with respect to Figures 14 through 18 can be implemented as executable code stored on a computer- or machine-readable, non-transitory, tangible storage medium (for example, floppy disk, hard disk, ROM, EEPROM, nonvolatile RAM, CD-ROM, etc.) that are completed based on execution of the code by a processor circuit implemented using one or more integrated circuits; the operations described herein also can be implemented as executable logic that is encoded in one or more non-transitory, tangible media for execution (for example, programmable logic arrays or devices, field programmable gate arrays, programmable array logic, application specific integrated circuits, etc.).

Figure 14 is a block diagram depicting an alternate embodiment of a deep-learning model process 1400, in accordance with certain examples. The deep-learning model process 1400 may be performed by the modeling application 132 of the data processing system 130, previously described herein with reference to Figure 1. In an example where the machine learning algorithm is a convolution neural network ("CNN"), the deep-learning model process 1400 receives images as an input and assigns importance (learnable weights and biases) to various aspects/objects in the images. The CNN reduces the images into a form that is easier to process without losing the features of the images that are critical for getting a good prediction. In the current example, the prediction is a reconstructed facial expression based on received IR images of a user's chin profile.

In block 1410, the data processing system 130 receives IR images from either the necklace device 1210 or the neckband device 1220. Example necklace 1210 IR images are depicted at 1410-1. Example neckband 1220 IR images are depicted at 1410-2 and 1410-3 as the neckband acquires both a right and left side IR image of a user's chin profile. Other example IR images are depicted in row 1540A of Figure 15A and row 1540B of Figure 15B.

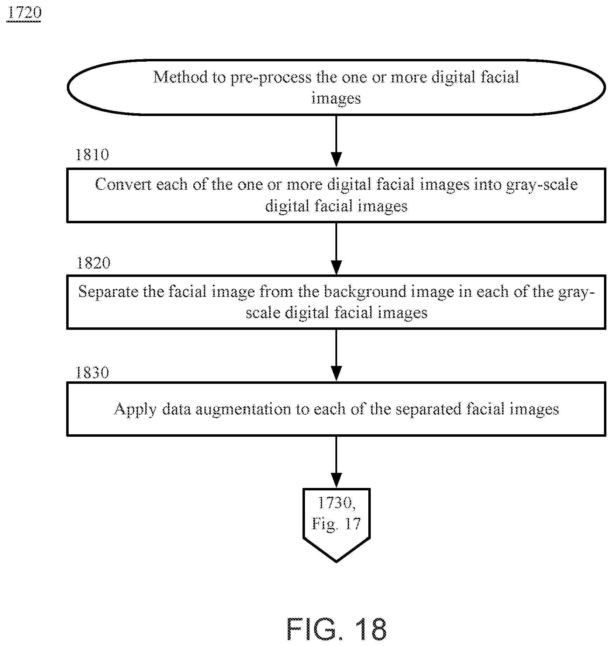

In block 1420, the data processing system 130 pre-processes the IR images. Pre-processing the IR images is described in greater detail in reference to method 1720 of Figure 18.

In block 1425, the data processing system 130 duplicates the pre-processed IR images of the necklace device 1210 into three channels to improve the expressiveness and the ability to extract features of the model. As the neckband device 1220 already comprises two pre-processed images, the images are not duplicated into additional channels.

The pre-processed IR images are input into an image processing phase of the deep-learning model process 1400 depicted at block 1430. Block 1430 comprises convolution layers, normalization layers, and an averaging pooling layer. The processing of block 1430 is described in greater detail herein with reference to blocks 414 and 416 of Figure 4. The output from block 1430 is a vector representation of each of the pre-processed IR images.

The vector representations of each of the pre-processed IR images are input into a regression phase 1440 of the deep-learning model process 1400. The architecture of the regression phase 1440 is similar to the architecture of regression phase 450, previously described herein with reference to Figure 4. Within the regression phase 1440, the data processing system 130 extracts details from the vector representations of the pre-processed IR images regarding facial components including the cheek, mouth, eyes, eyebrows, chin, and nose and three-dimensional head rotation angles. The data processing system 130 represents each facial expression with blend shapes that are a three-dimensional representation of the vector representations. The parameters of the blend shapes and the three-dimensional head rotation angles, or Euler angles, are obtained by learning from the IR images captured from the neck. The data processing system 130 compares the blend shapes and Euler angles from the vector representations to the blend shapes and Euler angles of the data training set to match the blend shapes/Euler angles to a facial expression from the data training set.

In block 1450, the data processing system 130 combines the blend shapes with three-dimensional angles of rotation of the user's head. In an example, the three-dimensional angles of rotation are represented by Euler's angles of roll, yaw, and pitch. In block 1460, the final facial expression reconstruction is output as a three-dimensional image. Example three-dimensional facial expression reconstructions are depicted in row 1530A of Figure 15A and row 1530B of Figure 15B. In an example, the three-dimensional facial expression reconstructions may be further processed by a classifier process, such as classifier process 500 for applications such as silent speech recognition, emoji input, real-time avatar facial expressions, or any other suitable applications.

Figure 15A is a diagram 1500A depicting the correlation between frontal view camera images 1510A, three-dimensional training data 1520A, predicted three-dimensional face expressions 1530A, and infrared facial images 1540A, in accordance with certain examples.

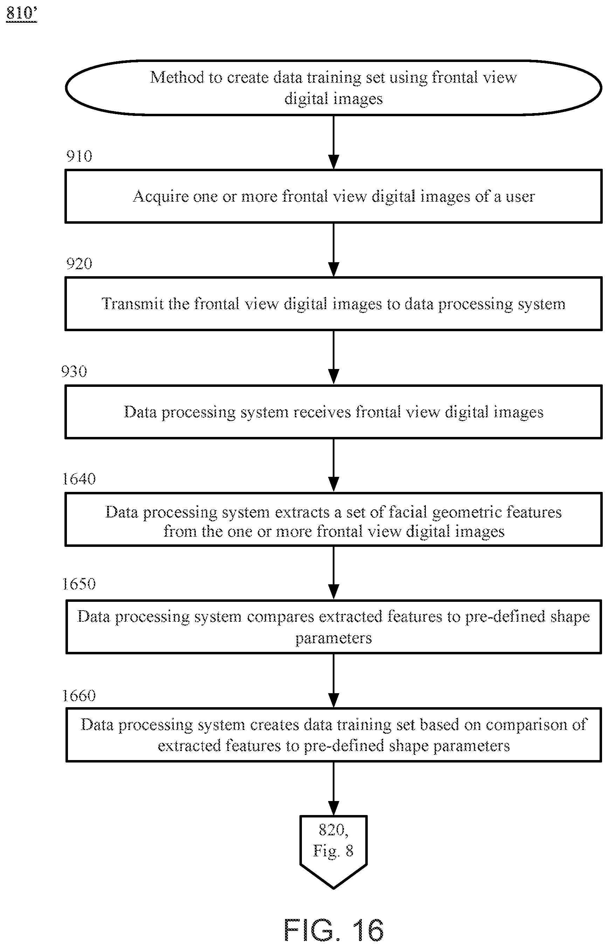

Row 1510A illustrates frontal view camera images of a user. To construct a training data set or ground truth, frontal camera images of a user are acquired with the user making various different facial expressions, as depicted in images 1510A-1 through 1510-n. The method to create the training data set from the frontal view camera images is described herein in greater detail with reference to method 810' of Figure 16. Row 1520A illustrates three-dimensional training data in three-dimensional blend shapes and head rotation angles. The three-dimensional training data images depicted in images 1520A-1 through 1520A-n correlate with images 1510A-1 through 1510-n. The three-dimensional training data images 1520A are the output of method 810' of Figure 16.

Row 1540A depicts IR images 1540A-1 through 1540A-n captured by a neck-mounted wearable device, such as necklace device 1210 or neckband device 1220 described herein in greater detail in reference to Figure 12. The IR images 1540A, and the three-dimensional training data images 1520A are used in the deep-learning model process 1400 to construct the predicted facial expressions 1530A illustrated in row 1530A of Figure 15A. The predicted facial expressions 1530A are depicted as three-dimensional images in images 1530A-1 through 1530A-n. The predicted facial expressions 1530A are illustrated in Figure 15A beneath the three-dimensional training data images 1520A to illustrate the accuracy of predicting facial expressions using IR images 1540A acquired from necklace device 1210 or neckband device 1220.

Figure 15B is a diagram 1500B depicting the correlation between additional frontal view camera images 1510B, three-dimensional training data 1520B, predicted three-dimensional face expressions 1530B, and infrared facial images 1540B, in accordance with certain examples. Each of the frontal view camera images 1510B, three-dimensional training data 1520B, predicted three-dimensional face expressions 1530B, and infrared facial images 1540B correspond to the frontal view camera images 1510A, three-dimensional training data 1520A, predicted three-dimensional face expressions 1530A, and infrared facial images 1540A described herein with reference to Figure 15A, except these items correlate to different facial expressions.

In this example, the images captured by the cameras of the neck-mounted devices can be processed for facial reconstruction similarly to the methods discussed previously with reference to Figures 8-11. Various alternatives to the methods of Figures 8-11 will be discussed.

Figure 16 is a block flow diagram depicting an alternative method 810' to create a data training set using frontal view images, in accordance with certain examples.

Blocks 910, 920, and 930 of Figure 16 were previously described herein with reference to Figure 9.

In block 1640, the data processing system 130 extracts a set of facial geometric features from the one or more frontal view digital images. In an example, the one or more frontal view digital images are three-dimensional digital images captured from a camera that provides depth data in real time along with visual information. Example frontal view digital images are depicted in rows 1510A and 1510B, respectively, of Figures 15A and 15B. In an example, the data processing system 130 extracts full facial expressions using an augmented reality ("AR") application. The AR application extracts high-quality and fine-grained details of facial expressions/movements of the eyes, eyebrows, cheeks, mouth, nose, and chin. The AR application can extract facial features such as facial geometry and rotation from a depth map associated with the three-dimensional digital images. In an example, the rotation is represented by Euler's angles of roll, yaw, and pitch.

In block 1650, the data processing system 130 compares the extracted features to pre-defined shape parameters. In an example, the AR application comprises pre-defined blend shapes as templates for complex facial animations. In the example, the AR application comprises blend shapes with features for left and right eyes, mouth and jaw movement, eyebrows, cheeks, nose, tongue, and any other suitable facial features.

In block 1660, the data processing system 130 creates a data training set based on the comparison of the extracted features to the pre-defined shape parameters. The data training set comprises a blend shape with a Euler angle of head rotation as depicted in block 1520A of Figure 15A and block 1520B of Figure 15B. In an example, the data processing system 130 stores the data training set in the data storage unit 133.

From block 1660, the method 810' returns to block 820 of Figure 8.

Figure 17 is a block flow diagram depicting an alternative method 860' to reconstruct facial expressions using one or more facial digital images, in accordance with certain examples.

Block 1010 of Figure 17 was previously described herein with reference to Figure 10.

In block 1720, the data processing system 130 pre-processes the one or more facial digital images. Example facial digital images are depicted in rows 1540A and 1540B of Figures 15A and 15B, respectively. Block 1720 is described in greater detail herein with reference to method 1720 of Figure 18.

Figure 18 is a block flow diagram depicting an alternative method 1720 to pre-process the one or more digital facial images, in accordance with certain examples.

In block 1810, the data processing system 130 converts each of the one or more digital facial images into gray-scale digital facial images. The one or more digital facial images are converted to gray-scale to remove any potential color variance. As the IR bandpass filter 1214 only allows monochrome light into the camera 110, any color present in the one or more digital facial images does not represent details related to the facial expression of the user.

In block 1820, the data processing system 130 separates the facial image from the background image in each of the gray-scale digital facial images. Using the IR technology previously discussed in reference to Figure 12, the user's skin in the images appears brighter than the surrounding background. However, some light sources in the background may contain IR light that would introduce noise in the background. To remove the noise, the gray-scale digital facial images are binarized based on a set brightness threshold. The data processing system 130 separates the facial image as the brighter component of the gray-scale digital facial image.

In block 1830, the data processing system 130 applies data augmentation to each of the separated facial images. As a user wears a necklace device 1210 or a neckband device 1220 and performs activities, the position and angles of the cameras 110 of the necklace device 1210 and neckband device 1220 may not be constant. To mitigate the issue, a probability of 60% to conduct three types of image transformations is set, which can be caused by camera shifting causing translation, rotation, and scaling on the images. In an alternate example, any suitable probability may be used. Three Gaussian Models are deployed to generate the parameters for the translation (*µ* = 0, *σ*² = 30), rotation (*µ* = 0, σ² = 10), scaling (*µ* = 1, *σ² =* 0.2) on the synthesized training data. The data augmentation is performed on all the images in the training dataset during each training epoch before feeding the images into deep-learning model process 1400. Data augmentation improves the deep-learning model's ability to confront camera shifting and avoid over-fitting during model training.

From block 1830, the method 1720 returns to block 1730 of Figure 17.

In block 1730, the data processing system 130 applies the deep-learning model to each of the pre-processed one or more facial digital images to generate facial expression reconstruction. The deep-learning model for facial expression reconstruction was described in the deep-learning model process 1400 herein with reference to Figure 14 and in the classifier process 500 with reference to Figure 5. The results of the facial expression reconstruction from block 1730 may include the reconstruction output from block 1460 of Figure 14 and/or the encoding of a facial event class from block 550 of Figure 5. For example, the data processing system 130 may output from block 1730 the images from the process 1400 of Figure 14. The data processing system 130 also, or alternatively, may further process the facial expression reconstruction such that the output from block 1730 comprises a three-dimensional visualization of the facial expression, silent speech recognition, an emoji associated with the facial expression reconstruction, and/or real-time avatar facial expressions associated with the facial expression reconstruction, such as described by the classifier process 500 of Figure 5.

From block 1730, the method 860' returns to block 870 of Figure 8 to output results of the facial reconstruction.

Cameras 110 were described herein with reference to Figure 1 as any suitable sensors for capturing images. For example, cameras 110 may include depth cameras, red-green-blue ("RGB") cameras, infrared ("IR") sensors, acoustic cameras or sensors, microphones and speakers, thermal imaging sensors, charge-coupled devices ("CCDs"), complementary metal oxide semiconductor ("CMOS") devices, active-pixel sensors, radar imaging sensors, fiber optics, and any other suitable image device technology. While the examples herein described specific cameras for the headband device 210, earbud devices 220, necklace device 1210, and neckband device 1220, it should be appreciated that any type of camera can be used with any of the wearable devices. The methods to process the images and recreate the facial expressions are adjusted based on camera/image type and are not dependent on the type of device used to acquire the images.

The embodiments herein describe wearable devices in the form of head-mounted devices headband device 210 and earbud devices 220, and neck-mounted devices necklace device 1210 and neckband device 1220. Any suitable wearable device may be used such that the one or more cameras may be directed towards a user's face including, but not limited to, glasses, smart glasses, a visor, a hat, a helmet, headgear, a virtual reality ("VR") headset.

The embodiments herein describe head-mounted and neck-mounted wearable devices comprises cameras 110 with adjustable positions and angles. Each camera 110 may be positioned such that at least one of a buccal region, a zygomatic region, and/or a temporal region of a user's face are included in the field of view of the camera 110.

In an alternate embodiment, the wearable devices previously described herein may be configured for use in a hand-face touching detection system to recognize and predict a time and position that a user's hand touches the user's face. An important step in reducing the risk of infection is avoiding touching the face because a virus, such as COVID-19, may enter the mucous membranes of the eyes, nose, and/or mouth. Touching different areas of the face carries different health related risks. For example, contacting a mucous membrane may introduce a higher risk of transmitting a virus than touching non-mucous areas such as the chin and cheek. In addition, the frequency of touching the face may be an indicator regarding the stress level of a person. Understanding how people touch their face may alleviate multiple health challenges. Accurately recognizing where the hand touches the face is an important step towards alleviating health risks introduced by hand-face touching behaviors. In order to implement behavior intervention technologies, the hand-face touching detection system predicts the behavior in advance rather than simply detecting the touching behavior.

A data training set is created similar to the data training sets described herein with reference to Figures 9 and 16. The difference is that instead of frontal view images of a user capturing just the user's face, the data training set uses frontal view images of a user with different hand-face touching positions. For example, frontal view images of the user may be acquired with the user touching his eye, nose, mouth, cheek, or any other suitable facial feature. In addition to touching faces directly, people move their hands closer to their faces when performing daily activities such as eating and drinking. The daily activities are classified as separate behaviors to avoid false-positive errors of a person touching their face. Additional frontal view images are acquired for the data training set depicting example daily activities. For example, the frontal view images may comprise a user eating with his hand, a fork, a spoon, or chopsticks. The user may be drinking with a straw, a bottle, or a cup. The user may be placing an earbud in or out, putting on or taking off eyeglasses, adjusting eyeglasses, applying lip balm, or adjusting his hair. Any suitable daily activities may be used in the frontal view images to create the data training set.

The frontal view images of the user are sent to a server, such as data processing system 130, to create the data training set, as previously described herein with reference to Figures 9 and 16. However, instead of extracting facial landmark positions as described in block 940 of Figure 9 or facial geometric features as described in block 1640 of Figure 16, the data processing system extracts hand/facial landmark positions or hand/geometric features to create the data training set.

In an example, necklace device 1210 may be positioned on a user to acquire images of the user's facial area, as previously described herein, to also include a user's hand if positioned or in motion near the user's face. Any suitable wearable device may be used to acquire the images of the user's face. To predict the time and location of a hand-face touch, camera images are monitored over a period of time. Camera images are sent to a server, such as data processing system 130, for processing. The data processing system receives the hand/facial images and reconstructs the position of the user's hand relative to the user's face using the data training set and a deep-learning model, such as the models previously described herein with reference to Figures 4 and 14. The data processing system monitors the hand-face position over time to predict where and when a user may touch his face. Alternatively, the data processing system may determine that the user is participating in a daily activity and that the user is not in the process of a hand-face touch. In each case, the system outputs a reconstructed image (or other similar information as described herein) depicting the user's facial expression and a representation of the hand-touch activity. The system also can log each hand-touch to the facial area and output notifications of the activity.

In an alternate embodiment, acoustic sensing technology can be used to reconstruct facial expressions using an array of microphones and speakers and deep-learning models. The acoustic technology comprises a wearable device such as headphones, earbuds, necklaces, neckbands, and any other suitable form factors such that the microphones and speakers can be mounted or attached to the wearable device. In an example, the microphones are Micro-Electro-Mechanical System ("MEMS") microphones that are placed on a printed circuit board ("PCB"). In an example, each microphone/speaker assembly may comprise four microphones and one speaker. Any suitable number of microphones and speakers may be included. The positions of the microphones and speakers may be adjustable to optimize the recording of reflected signals.

The acoustic wearable device actively sends signals from the speakers towards a user's face. In an example, the speakers transmit inaudible acoustic signals within a frequency range of 16kHz to 24kHz towards the user's face. Any suitable frequency range may be used. The signals are reflected by the user's face and captured by the microphones on the acoustic wearable device. The signals are reflected differently back towards the microphones based on different facial expressions or movements. A Channel Impulse Response ("CIR") is calculated based on the acoustic signals received at each microphone.

Each microphone is in communication with a computing device, such as computing device 120, such that the CIR images/data can be transmitted for processing to a server, such as data processing system 130.

The data processing system creates a data training set using frontal view images of a user in a machine learning algorithm, previously described herein with reference to Figures 9 and 16. The data processing system receives the CIR images/data and reconstructs the user's facial expression using the data training set and a deep-learning model, such as the models previously described herein with reference to Figures 4 and 14. The data processing system outputs the resultant facial expression reconstruction, such as previously described herein with reference to block 870 of Figure 8.

The wearable devices and systems described herein may be used in applications such as silent speech recognition, emoji input, and real-time avatar facial expressions. Silent speech recognition is a method to recognize speech when vocalization is inappropriate, background noise is excessive, or vocalizing speech is challenging due to a disability. The data training set for silent speech recognition comprises a set of frontal view facial images directed to the utterance of a word or phrase. To recognize silent speech, the wearable device, such as necklace 1220, captures a series of facial movements from underneath the chin of a user while the user silently utters words or commands and transfers the series of digital facial images to the data processing system 130 for facial expression reconstruction. The results of the facial expression reconstruction, previously described herein with reference to block 456 or block 1460, are used as inputs to the classifier process 500, previously described herein with reference to Figure 5. Using the series of facial expression reconstruction images, the classifier process 500 detects the start time and end time of an utterance and selects the frames from the series of facial expression reconstruction images associate with the utterance. A vector representation of the utterance is created and input into a probability distribution to predict a word or phrase. In some embodiments for applications, such as in a testing process after the training, or using a trained system, a front view of a user is not needed. In some embodiments for speech recognition, one or more imaging sensors, such as camera(s) in a necklace and/or a wearable device worn in or on ear(s) of a user, capture a series of images for speaking a syllable, word, or phrase with or without audio (for example, at least two images of a syllable, a word, or a phrase), wherein each image comprises only a portion of a full face. In some embodiments, one image used in the application only captures less than 50%, less than 40%, less than 30% , less than 25%, less than 20%, or less than 15% of a full face. In some embodiments, the one or more imaging sensors used in the application do not capture direct visual information for eyes, nose, and/ or mouth. In some embodiments, the one or more images and the combination thereof used in the application capture incomplete visual information for eyes, nose, and/or mouth. In some embodiments, the system and method are configured to recognize or predict speech, and/or other facial expression(s) at a high accuracy, wherein the accuracy is at least 75%, at least 80%, at least 85%, at least 90%, at least 95%, or at least 98% for one or multiple words, phrases, or facial expressions on average. In some embodiments, the application is a speech recognition based on images/videos captured by the system. In other embodiments, the image-based or video-based speech recognition may be combined with an audio-based speech recognition to improve the accuracy of speech recognition. In some embodiments, the image-based or video-based speech recognition may be used to validate a result of an audio-based speech recognition.

### Other Examples

Figure 19 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a router or other network node, a vehicular information system, one or more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. The processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), **PCI** express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include WANs, LANs, intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. Any of the processor 2010, the other elements of the computing machine 2000, or the various peripherals discussed herein may be integrated into a single device such as a system on chip ("SOC"), system on package ("SOP"), or ASIC device.

Examples may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing examples in computer programming, and the examples should not be construed as limited to any one set of computer program instructions. Further, a skilled programmer would be able to write such a computer program to implement an example of the disclosed examples based on the appended flow charts and associated description in the application text. Therefore, disclosure of a particular set of program code instructions is not considered necessary for an adequate understanding of how to make and use examples. Further, those skilled in the art will appreciate that one or more aspects of examples described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. Computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays ("FPGA"), etc.

The systems, methods, and acts described in the examples presented previously are illustrative, and, alternatively, certain acts can be performed in a different order, in parallel with one another, omitted entirely, and/or combined between different examples, and/or certain additional acts can be performed, without departing from the scope of various examples. Accordingly, such alternative examples are included in the scope of the following claims, which are to be accorded the broadest interpretation so as to encompass such alternate examples.

Although specific examples have been described above in detail, the description is merely for purposes of illustration. It should be appreciated, therefore, that many aspects described above are not intended as essential elements unless explicitly stated otherwise. Modifications of, and equivalent components or acts corresponding to, the disclosed aspects of the examples, in addition to those described above, can be made by a person of ordinary skill in the art, having the benefit of the present disclosure, without departing from the scope of examples defined in the following claims, the scope of which is to be accorded the broadest interpretation so as to encompass such modifications.

Various embodiments are described herein. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s). Reference throughout this specification to "one embodiment," "an embodiment," "an example embodiment," or other similar language means that a particular feature, structure, or characteristic described in connection with the embodiment is included in at least one embodiment of the invention described herein. Thus, appearances of the phrases "in one embodiment," "in an embodiment," "an example embodiment," or other similar language in various places throughout this specification are not necessarily all referring to the same embodiment. Furthermore, the particular features, structures, or characteristics may be combined in any suitable manner in one or more embodiments, as would be apparent to a person having ordinary skill in the art and the benefit of this disclosure. Furthermore, while some embodiments described herein include some, but not other, features included in other embodiments, combinations of features of different embodiments are meant to be within the scope of the invention. For example, in the appended claims, any of the claimed embodiments can be used in any combination.

## Claims

1. A wearable system, comprising:
at least first and second acoustic imaging sensors, each acoustic imaging sensor comprising at least one speaker configured to transmit acoustic signals towards a face of a wearer of the wearable system and at least one microphone configured to receive acoustic signals reflected by the face of the wearer of the wearable system, the first and second acoustic imaging sensors generating acoustic image data based on the acoustic signals received by their respective microphones;
a processor that receives the acoustic image data from each of the first and second acoustic imaging sensors; and
a physical memory, the physical memory comprising instructions that when executed by the processor cause the processor to:
process the acoustic image data received from the first and second acoustic imaging sensors utilizing a machine learning model;
identify based on an output of the machine learning model a particular facial expression or facial movement corresponding to the received acoustic image data; and
communicate an indication of the identified facial expression or facial movement.

2. The wearable system of claim **1,** wherein communicating an indication of the identified facial expression or facial movement comprises communicating at least one of a two-dimensional visualization of the facial expression or facial movement, a three-dimensional visualization of the facial expression or facial movement, an emoji associated with the facial expression or facial movement, or an avatar image associated with the facial expression or facial movement.

3. The wearable system of claim 1, wherein a different set of acoustic image data is obtained from received acoustic signals of each microphone of each of the first and second acoustic imaging sensors.

4. The wearable system of claim 1, wherein the first and second acoustic imaging sensors are positioned on the wearable system to capture acoustic image data of a first facial feature on a first side of a sagittal plane of the wearer and to capture acoustic image data of a second facial feature on a second side of the sagittal plane of the wearer, respectively.

5. The wearable system of claim 1, wherein the first acoustic imaging sensor is positioned on the wearable system to capture first acoustic image data of a first portion of the face of the wearer, and the second acoustic imaging sensor is positioned on the wearable system to capture second acoustic image data of a second portion of the face of the wearer.

6. The wearable system of claim 5, wherein the first acoustic imaging sensor is positioned on the wearable system to capture acoustic image data of the first facial feature on a first side of a sagittal plane of the wearer, and the second acoustic imaging sensor is positioned on the wearable system to capture acoustic image data of the second facial feature on a second side of the sagittal plane of the wearer.

7. The wearable system of claim 6, wherein the first facial feature comprises a left side feature of a face of the wearer, and the second facial feature comprises a right side feature of the face of the wearer,
or
wherein the first facial feature comprises a left underside feature of a chin of the wearer, and the second facial feature comprises a right underside feature of the chin of the wearer.

8. The wearable system of any of claims 1 to 7, wherein the wearable system comprises ear buds, ear pods, in-the-ear (ITE) headphones, over-the-ear headphones, or outside-the-ear (OTE) headphones to which at least one of the first and second acoustic imaging sensors is attached,
or
wherein the wearable system comprises glasses, smart glasses, a visor, a hat, a helmet, headgear, a virtual reality headset, or another head-borne device to which at least one of the first and second acoustic imaging sensors is attached,
or
wherein the wearable system comprises a necklace, a neckband, or a garment-attachable system to which at least one of the first and second acoustic imaging sensors is attached.

9. The wearable system of claim 1, the physical memory comprising further instructions that when executed by the processor cause the processor to:
assign at least one of a letter or a word to the identified facial expression or facial movement based on a degree of correspondence of the assigned at least one of a letter or a word to the identified facial expression or facial movement, and
output text or speech corresponding to the assigned at least one of a letter or a word.

10. The wearable system of claim 1, wherein the machine learning model is trained using a data training set comprising image data of at least one user.

11. The wearable system of claim 10, wherein the training comprises:
receiving one or more frontal view facial images of a subject, each of the frontal view facial images corresponding to a facial expression or facial movement of a plurality of facial expressions or facial movements of the subject;
receiving one or more images of the subject from at least one acoustic imaging sensor, each of the images from the at least one acoustic imaging sensor also corresponding to a facial expression or facial movement of the plurality of facial expressions or facial movements of the subject; and
correlating, for each of the facial expressions or facial movements, the one or more images from the at least one acoustic imaging sensor corresponding to a particular facial expression or facial movement to the one or more frontal view facial images corresponding to the particular facial expression or facial movement.

12. The wearable system of claim 11, wherein correlating for each of the facial expressions or facial movements comprises:
extracting a plurality of landmark positions from each of the one or more frontal view facial images of the subject;
extracting a plurality of landmark positions from each of the one or more images of the subject from the at least one acoustic imaging sensor;
correlating the landmark positions for a particular frontal view facial image with a particular facial expression or facial movement; and
correlating the landmark positions for a particular one of the images of the subject from the at least one acoustic imaging sensor with the particular facial expression or facial movement.

13. A method to determine a facial expression or facial movement using a wearable system, comprising:
positioning a first acoustic imaging sensor of a wearable system, e.g., comprising positioning the first acoustic imaging device in a vicinity of an ear of the wearer facing forward to include within a field of view at least one of a buccal region, a zygomatic region, and/or a temporal region of one side of the wearer's face, to image a first facial feature of a wearer;
imaging the first facial feature of the wearer using the first acoustic imaging sensor to generate first acoustic image data;
processing the first acoustic image data in a machine learning system; and
assigning, based on a result of the processing in the machine learning system, a particular facial expression or facial movement, of a plurality of facial expressions or facial movements, to the imaged first facial feature.

14. A method to determine a facial expression or a facial movement using a wearable system, comprising:
positioning a first acoustic imaging sensor of a wearable system to image a first facial feature of a wearer;
positioning a second acoustic imaging sensor of the wearable system to image a second facial feature of the wearer;
imaging the first facial feature of the wearer using the first acoustic imaging sensor to generate first acoustic image data;
imaging the second facial feature of the wearer using the second acoustic imaging sensor to generate second acoustic image data;
processing the first and second acoustic image data in a machine learning system; and
assigning, based on a result of the processing in the machine learning system, a particular facial expression or facial movement, of a plurality of facial expressions or facial movements, to the imaged first facial feature and the imaged second facial feature.

## Patentansprüche

1. Tragbares System, umfassend:
mindestens einen ersten und einen zweiten akustischen bildgebenden Sensor, wobei jeder akustische bildgebende Sensor mindestens einen Lautsprecher umfasst, der so konfiguriert ist, dass er akustische Signale in Richtung eines Gesichts eines Trägers des tragbaren Systems aussendet, und mindestens ein Mikrofon umfasst, das so konfiguriert ist, dass es von dem Gesicht des Trägers des tragbaren Systems reflektierte akustische Signale empfängt, wobei der erste und der zweite akustische bildgebende Sensor basierend auf den von ihren jeweiligen Mikrofonen empfangenen akustischen Signalen akustische Bilddaten generieren;
einen Prozessor, der die akustischen Bilddaten von jedem des ersten und des zweiten akustischen bildgebenden Sensors empfängt; und
einen physischen Speicher, wobei der physische Speicher Anweisungen umfasst, die, wenn sie vom Prozessor ausgeführt werden, den Prozessor veranlassen:
die von dem ersten und dem zweiten akustischen bildgebenden Sensor empfangenen akustischen Bilddaten unter Verwendung eines Modells für maschinelles Lernen zu verarbeiten;
basierend auf einer Ausgabe des Modells für maschinelles Lernen einen bestimmten Gesichtsausdruck oder eine bestimmte Gesichtsbewegung zu identifizieren, die den empfangenen akustischen Bilddaten entsprechen; und
eine Angabe des identifizierten Gesichtsausdrucks oder der identifizierten Gesichtsbewegung zu übermitteln.

2. Tragbares System nach Anspruch 1, wobei das Übermitteln einer Angabe des identifizierten Gesichtsausdrucks oder der identifizierten Gesichtsbewegung das Übermitteln mindestens eines der Folgenden umfasst: einer zweidimensionalen Visualisierung des Gesichtsausdrucks oder der Gesichtsbewegung, einer dreidimensionalen Visualisierung des Gesichtsausdrucks oder der Gesichtsbewegung, eines dem Gesichtsausdruck oder der Gesichtsbewegung zugeordneten Emojis oder eines dem Gesichtsausdruck oder der Gesichtsbewegung zugeordneten Avatarbildes.

3. Tragbares System nach Anspruch 1, wobei aus den empfangenen akustischen Signalen jedes Mikrofons des ersten und des zweiten akustischen bildgebenden Sensors jeweils ein unterschiedlicher Satz akustischer Bilddaten erhalten wird.

4. Tragbares System nach Anspruch 1, wobei der erste und der zweite akustische bildgebende Sensor so am tragbaren System positioniert sind, dass sie jeweils akustische Bilddaten eines ersten Gesichtsmerkmals auf einer ersten Seite einer Sagittalebene des Trägers bzw. akustische Bilddaten eines zweiten Gesichtsmerkmals auf einer zweiten Seite der Sagittalebene des Trägers erfassen.

5. Tragbares System nach Anspruch 1, wobei der erste akustische bildgebende Sensor an dem tragbaren System positioniert ist, um erste akustische Bilddaten eines ersten Bereichs des Gesichts des Trägers zu erfassen, und der zweite akustische bildgebende Sensor an dem tragbaren System positioniert ist, um zweite akustische Bilddaten eines zweiten Bereichs des Gesichts des Trägers zu erfassen.

6. Tragbares System nach Anspruch 5, wobei der erste akustische bildgebende Sensor an dem tragbaren System positioniert ist, um akustische Bilddaten des ersten Gesichtsmerkmals auf einer ersten Seite einer Sagittalebene des Trägers zu erfassen, und der zweite akustische bildgebende Sensor an dem tragbaren System positioniert ist, um akustische Bilddaten des zweiten Gesichtsmerkmals auf einer zweiten Seite der Sagittalebene des Trägers zu erfassen.

7. Tragbares System nach Anspruch 6, wobei das erste Gesichtsmerkmal ein Merkmal der linken Gesichtshälfte des Trägers umfasst und das zweite Gesichtsmerkmal ein Merkmal der rechten Gesichtshälfte des Trägers umfasst
oder
wobei das erste Gesichtsmerkmal ein Merkmal der linken Unterseite eines Kinns des Trägers umfasst und das zweite Gesichtsmerkmal ein Merkmal der rechten Unterseite des Kinns des Trägers umfasst.

8. Tragbares System nach einem der Ansprüche 1 bis 7, wobei das tragbare System Ohrstöpsel, Ohrhörer, In-Ear-Kopfhörer (ITE), Over-Ear-Kopfhörer oder Outside-the-Ear-Kopfhörer (OTE) umfasst, an denen mindestens einer des ersten und des zweiten akustischen bildgebenden Sensors angebracht ist,
oder
wobei das tragbare System eine Brille, Smart Glasses, ein Visier, einen Hut, einen Helm, eine Kopfbedeckung, ein Virtual-Reality-Headset oder eine andere am Kopf getragene Vorrichtung umfasst, an der mindestens einer des ersten und des zweiten akustischen bildgebenden Sensors angebracht ist,
oder
wobei das tragbare System eine Halskette, ein Nackenband oder ein an Kleidung befestigbares System umfasst, an dem mindestens einer des ersten und des zweiten akustischen bildgebenden Sensors angebracht ist.

9. Tragbares System nach Anspruch 1, wobei der physische Speicher weitere Anweisungen umfasst, die, wenn sie vom Prozessor ausgeführt werden, den Prozessor veranlassen:
dem erkannten Gesichtsausdruck oder der erkannten Gesichtsbewegung mindestens einen Buchstaben oder ein Wort basierend auf einem Grad der Übereinstimmung zwischen dem zugewiesenen mindestens einen Buchstaben oder Wort und dem erkannten Gesichtsausdruck oder der erkannten Gesichtsbewegung zuzuweisen und
Text oder Sprache auszugeben, die dem zugewiesenen mindestens einen Buchstaben oder Wort entsprechen.

10. Tragbares System nach Anspruch 1, wobei das Modell für maschinelles Lernen unter Verwendung eines Trainingsdatensatzes trainiert wird, der Bilddaten mindestens eines Nutzers umfasst.

11. Tragbares System nach Anspruch 10, wobei das Training umfasst:
Empfangen eines oder mehrerer Gesichtsbilder einer Person in Frontalansicht, wobei jedes der Gesichtsbilder in Frontalansicht einem Gesichtsausdruck oder einer Gesichtsbewegung aus einer Vielzahl von Gesichtsausdrücken oder Gesichtsbewegungen der Person entspricht;
Empfangen eines oder mehrerer Bilder der Person von mindestens einem akustischen bildgebenden Sensor, wobei jedes der Bilder von dem mindestens einen akustischen bildgebenden Sensor ebenfalls einem Gesichtsausdruck oder einer Gesichtsbewegung aus der Vielzahl von Gesichtsausdrücken oder Gesichtsbewegungen der Person entspricht; und
Korrelieren, für jeden der Gesichtsausdrücke oder jeder der Gesichtsbewegungen, des einen oder der mehreren Bilder von dem mindestens einen akustischen bildgebenden Sensor, die einem bestimmten Gesichtsausdruck oder einer bestimmten Gesichtsbewegung entsprechen, mit dem einen oder den mehreren Gesichtsbildern in Frontalansicht, die dem bestimmten Gesichtsausdruck oder der bestimmten Gesichtsbewegung entsprechen.

12. Tragbares System nach Anspruch 11, wobei das Korrelieren für jeden der Gesichtsausdrücke oder jeder der Gesichtsbewegungen umfasst:
Extrahieren einer Vielzahl von Landmarkenpositionen aus jedem des einen oder der mehreren Gesichtsbilder des Subjekts in Frontalansicht;
Extrahieren einer Vielzahl von Landmarkenpositionen aus jedem des einen oder der mehreren Bilder des Subjekts von dem mindestens einen akustischen bildgebenden Sensor;
Korrelieren der Landmarkenpositionen für ein bestimmtes Gesichtsbild in Frontalansicht mit einem bestimmten Gesichtsausdruck oder einer bestimmten Gesichtsbewegung; und
Korrelieren der Landmarkenpositionen für ein bestimmtes der Bilder des Subjekts von dem mindestens einen akustischen bildgebenden Sensor mit dem bestimmten Gesichtsausdruck oder der bestimmten Gesichtsbewegung.

13. Verfahren zum Bestimmen eines Gesichtsausdrucks oder einer Gesichtsbewegung unter Verwendung eines tragbaren Systems, umfassend:
Positionieren eines ersten akustischen bildgebenden Sensors eines tragbaren Systems, wobei dies beispielsweise das Positionieren der ersten akustischen bildgebenden Vorrichtung in der Nähe eines Ohrs des Trägers umfasst, wobei diese nach vorne gerichtet ist, um mindestens einen der folgenden Bereiche - den Wangenbereich, den Jochbeinbereich und/oder den Schläfenbereich - einer Seite des Gesichts des Trägers in das Sichtfeld einzubeziehen, um ein erstes Gesichtsmerkmal eines Trägers abzubilden;
Abbilden des ersten Gesichtsmerkmals des Trägers unter Verwendung des ersten akustischen bildgebenden Sensors, um erste akustische Bilddaten zu generieren;
Verarbeiten der ersten akustischen Bilddaten in einem System für maschinelles Lernen; und
Zuweisen eines bestimmten Gesichtsausdrucks oder einer bestimmten Gesichtsbewegung aus einer Vielzahl von Gesichtsausdrücken oder Gesichtsbewegungen zu dem abgebildeten ersten Gesichtsmerkmal basierend auf einem Ergebnis der Verarbeitung im System für maschinelles Lernen.

14. Verfahren zum Bestimmen eines Gesichtsausdrucks oder einer Gesichtsbewegung unter Verwendung eines tragbaren Systems, umfassend:
Positionieren eines ersten akustischen bildgebenden Sensors eines tragbaren Systems, um ein erstes Gesichtsmerkmal eines Trägers abzubilden;
Positionieren eines zweiten akustischen bildgebenden Sensors eines tragbaren Systems, um ein zweites Gesichtsmerkmal eines Trägers abzubilden;
Abbilden des ersten Gesichtsmerkmals des Trägers unter Verwendung des ersten akustischen bildgebenden Sensors, um erste akustische Bilddaten zu generieren;
Abbilden des zweiten Gesichtsmerkmals des Trägers unter Verwendung des zweiten akustischen bildgebenden Sensors, um zweite akustische Bilddaten zu generieren;
Verarbeiten der ersten und zweiten akustischen Bilddaten in einem System für maschinelles Lernen; und
Zuweisen eines bestimmten Gesichtsausdrucks oder einer bestimmten Gesichtsbewegung aus einer Vielzahl von Gesichtsausdrücken oder Gesichtsbewegungen zu dem abgebildeten ersten Gesichtsmerkmal und dem abgebildeten zweiten Gesichtsmerkmal basierend auf einem Ergebnis der Verarbeitung im System für maschinelles Lernen.

## Revendications

1. Système portable, comprenant :
au moins de premier et second capteurs d'imagerie acoustique, chaque capteur d'imagerie acoustique comprenant au moins un haut-parleur conçu pour transmettre des signaux acoustiques vers un visage d'un porteur du système portable et au moins un microphone conçu pour recevoir des signaux acoustiques réfléchis par le visage du porteur du système portable, les premier et second capteurs d'imagerie acoustique générant des données d'image acoustique sur la base des signaux acoustiques reçus par leurs microphones respectifs ;
un processeur qui reçoit les données d'image acoustique à partir de chacun des premier et second capteurs d'imagerie acoustique ; et
une mémoire physique, la mémoire physique comprenant des instructions qui, lorsqu'elles sont exécutées par le processeur, amènent le processeur à :
traiter les données d'image acoustique reçues à partir des premier et second capteurs d'imagerie acoustique à l'aide d'un modèle d'apprentissage automatique ;
identifier, sur la base d'une sortie du modèle d'apprentissage automatique, une expression faciale ou un mouvement facial particulier correspondant aux données d'image acoustique reçues ; et
communiquer une indication de l'expression faciale ou du mouvement facial identifié.

2. Système portable selon la revendication 1, dans lequel la communication d'une indication de l'expression faciale ou du mouvement facial identifié comprend la communication d'au moins l'un parmi une visualisation bidimensionnelle de l'expression faciale ou du mouvement facial, une visualisation tridimensionnelle de l'expression faciale ou du mouvement facial, un emoji associé à l'expression faciale ou au mouvement facial, ou une image d'avatar associée à l'expression faciale ou au mouvement facial.

3. Système portable selon la revendication 1, dans lequel un ensemble différent de données d'image acoustique est obtenu à partir de signaux acoustiques reçus de chaque microphone de chacun des premier et second capteurs d'imagerie acoustique.

4. Système portable selon la revendication 1, dans lequel les premier et second capteurs d'imagerie acoustique sont positionnés sur le système portable pour capturer des données d'image acoustique d'une première caractéristique faciale sur un premier côté d'un plan sagittal du porteur et pour capturer des données d'image acoustique d'une seconde caractéristique faciale sur un second côté du plan sagittal du porteur, respectivement.

5. Système portable selon la revendication 1, dans lequel le premier capteur d'imagerie acoustique est positionné sur le système portable pour capturer de premières données d'image acoustique d'une première partie du visage du porteur, et le second capteur d'imagerie acoustique est positionné sur le système portable pour capturer de secondes données d'image acoustique d'une seconde partie du visage du porteur.

6. Système portable selon la revendication 5, dans lequel le premier capteur d'imagerie acoustique est positionné sur le système portable pour capturer des données d'image acoustique de la première caractéristique faciale sur un premier côté d'un plan sagittal du porteur, et le second capteur d'imagerie acoustique est positionné sur le système portable pour capturer des données d'image acoustique de la seconde caractéristique faciale sur un second côté du plan sagittal du porteur.

7. Système portable selon la revendication 6, dans lequel la première caractéristique faciale comprend une caractéristique du côté gauche d'un visage du porteur, et la seconde caractéristique faciale comprend une caractéristique du côté droit du visage du porteur,
ou
dans lequel la première caractéristique faciale comprend une caractéristique inférieure gauche du menton du porteur, et la seconde caractéristique faciale comprend une caractéristique inférieure droite du menton du porteur.

8. Système portable selon l'une quelconque des revendications 1 à 7, dans lequel le système portable comprend des écouteurs boutons, des EarPods, des écouteurs intra-auriculaires (ITE), des écouteurs circum-auriculaires, ou des écouteurs extra-auriculaires (OTE) auxquels au moins l'un des premier et second capteurs d'imagerie acoustique est fixé,
ou
dans lequel le système portable comprend des lunettes, des lunettes intelligentes, une visière, un chapeau, un casque, un couvre-chef, un casque de réalité virtuelle ou tout autre dispositif porté sur la tête auquel au moins l'un des premier et second capteurs d'imagerie acoustique est fixé,
ou
dans lequel le système portable comprend un collier, un tour de cou, ou un système pouvant être attaché à un vêtement auquel au moins l'un des premier et second capteurs d'imagerie acoustique est fixé.

9. Système portable selon la revendication 1, la mémoire physique comprenant des instructions supplémentaires qui, lorsqu'elles sont exécutées par le processeur, amènent le processeur à :
attribuer au moins l'un parmi une lettre ou un mot à l'expression faciale ou au mouvement facial identifié sur la base d'un degré de correspondance de l'au moins une lettre ou de l'au moins un mot attribué avec l'expression faciale ou le mouvement facial identifié, et
produire un texte ou un discours correspondant à l'au moins une lettre ou à l'au moins un mot attribué.

10. Système portable selon la revendication 1, dans lequel le modèle d'apprentissage automatique est entraîné à l'aide d'un ensemble d'entraînement de données comprenant des données d'image d'au moins un utilisateur.

11. Système portable selon la revendication 10, dans lequel l'entraînement comprend :
la réception d'une ou plusieurs images faciales en vue de face d'un sujet, chacune des images faciales en vue de face correspondant à une expression faciale ou à un mouvement facial parmi une pluralité d'expressions faciales ou de mouvements faciaux du sujet ;
la réception d'une ou plusieurs images du sujet à partir d'au moins un capteur d'imagerie acoustique, chacune des images provenant dudit au moins un capteur d'imagerie acoustique correspondant également à une expression faciale ou à un mouvement facial parmi la pluralité d'expressions faciales ou de mouvements faciaux du sujet ; et
la mise en corrélation, pour chacune des expressions faciales ou chacun des mouvements faciaux, de la ou des images provenant de l'au moins un capteur d'imagerie acoustique correspondant à une expression faciale ou à un mouvement facial particulier avec la ou les images faciales en vue de face correspondant à l'expression faciale ou au mouvement facial particulier.

12. Système portable selon la revendication 11, dans lequel la mise en corrélation pour chacune des expressions faciales ou chacun des mouvements faciaux comprend :
l'extraction d'une pluralité de positions de points de repère à partir de chacune de la ou des images faciales en vue de face du sujet ;
l'extraction d'une pluralité de positions de points de repère de chacune de la ou des images du sujet provenant de l'au moins un capteur d'imagerie acoustique ;
la mise en corrélation des positions de points de repère pour une image faciale en vue de face particulière avec une expression faciale ou un mouvement facial particulier ; et
la mise en corrélation des positions de points de repère pour une image particulière parmi les images du sujet provenant de l'au moins un capteur d'imagerie acoustique avec l'expression faciale ou le mouvement facial particulier.

13. Procédé permettant de déterminer une expression faciale ou un mouvement facial à l'aide d'un système portable, comprenant :
le positionnement d'un premier capteur d'imagerie acoustique d'un système portable (par exemple, comprenant le positionnement du premier dispositif d'imagerie acoustique à proximité d'une oreille du porteur, orienté vers l'avant pour inclure dans un champ de vision au moins l'une parmi une région buccale, une région zygomatique, et/ou une région temporale d'un côté du visage du porteur) pour imager une première caractéristique faciale d'un porteur ;
le fait d'imager la première caractéristique faciale du porteur à l'aide du premier capteur d'imagerie acoustique pour générer de premières données d'image acoustique ;
le traitement des premières données d'image acoustique dans un système d'apprentissage automatique ; et
l'attribution, sur la base d'un résultat du traitement dans le système d'apprentissage automatique, d'une expression faciale ou d'un mouvement facial particulier, parmi une pluralité d'expressions faciales ou de mouvements faciaux, à la première caractéristique faciale imagée.

14. Procédé permettant de déterminer une expression faciale ou un mouvement facial à l'aide d'un système portable, comprenant :
le positionnement d'un premier capteur d'imagerie acoustique d'un système portable pour imager une première caractéristique faciale d'un porteur ;
le positionnement d'un second capteur d'imagerie acoustique du système portable pour imager une seconde caractéristique faciale du porteur ;
le fait d'imager la première caractéristique faciale du porteur à l'aide du premier capteur d'imagerie acoustique pour générer de premières données d'image acoustique ;
le fait d'imager la seconde caractéristique faciale du porteur à l'aide du second capteur d'imagerie acoustique pour générer de secondes données d'image acoustique ;
le traitement des premières et secondes données d'image acoustique dans un système d'apprentissage automatique ; et
l'attribution, sur la base d'un résultat du traitement dans le système d'apprentissage automatique, d'une expression faciale ou d'un mouvement facial particulier, parmi une pluralité d'expressions faciales ou de mouvements faciaux, à la première caractéristique faciale imagée et à la seconde caractéristique faciale imagée.
